# EUROPEAN PATENT APPLICATION

(11) **EP 2 662 260 A1**
(43) Date of publication of application: **13.11.2013**
(21) Application number: 11855152.2
(22) Date of filing: 27.12.2011
(51) Int. Cl.: B61L 25/02, G06Q 50/00

(54) **TRAVEL SITUATION DETECTION SYSTEM**

(30) Priority: 06.01.2011 WO PCT/JP2011/050105
(71) Applicant: The Aqua Enterprise Company, Kisarazu-shi, Chiba 292-0007 (JP)
(72) Inventor: YANO, Koichi, Kisarazu-shi Chiba 292-0007 (JP)
(74) Representative: Thibon, Laurent
(86) International application number: PCT/JP2011/080176
(87) International publication number: WO 2012/093618

(57) **Abstract**

A travel situation detection system that can minimize an occurrence of a delay in traveling of a person or baggage at a transportation facility and can improve the quality of a service provided in waiting a person and so forth.

The travel situation detection system specifies passage time at a check machine 21 when a traveler or baggage passes through a passage point on a travel pathway at an airport, compares the passage time or passage period elapsed between two passage points with a mean value, and notifies the traveler or a worker of the comparison result by using the check machine 21 or a terminal device 22. If the passage time or passage period is later or longer than the mean value, the traveler can rush to move while the worker who conveys baggage can be in hurry conveying the baggage. The travel situation detection system can further notify a waiting person or the like of the travel situation of the traveler by using the terminal device 22 or a mobile terminal device 23. This allows the waiting person to understand the travel situation of the traveler.

## Description

### TECHNICAL FIELD

The present invention relates to a travel situation detection system detecting a situation in which a person or object using a transportation means travels at a transportation facility.

### BACKGROUND ART

A traveler who uses a transportation means such as an airplane or train gets on/off a transportation means in a transportation facility such as an airport or train station. In the transportation facility, a travel route through which a traveler moves for getting on/off a transportation means may sometimes be constructed with a fence, gate or the like. In large transportation facilities, the travel routes are complicated and may be different for each transportation means. A traveler may not have a full knowledge of the travel routes and may be late by, for example, taking an incorrect way. When the delay in traveling occurs at a departure place of a transportation means, the traveler may miss the transportation means. If, furthermore, the traveler is planning to meet another person at an arrival place of the transportation means, the delay in traveling causes a burden on the person who is planning to meet the traveler. This may result in a failure in meeting the person. While, in a transportation facility, a direction board is installed and a worker guides or calls for travelers, it is difficult to prevent the delay in traveling in advance.

In the case where baggage is carried by a transportation means, the baggage is shipped to an appropriate transportation means and carried based on ship-to information such as a delivery address attached to the baggage. In a transportation facility, the baggage is conveyed by a worker or a conveying machine along a travel route in accordance with a transportation means to be used. However, delay may occur in the transport of baggage when the baggage, for example, arrives late at the transportation facility. When a delay in traveling occurs at a departure place of the transportation means, baggage may not be delivered correctly because, it may be happed that for example, baggage cannot be transported to the transportation means or may be transported to an incorrect transportation means.

In a transportation facility, a traveler or baggage may be inspected to prevent a suspicious person from boarding or taking dangerous baggage for keeping the transportation means safe. Since the inspection takes time, it may cause a delay or the like in travelling.

Patent Document 1 discloses a system for checking the fact that a traveler passes through a passage point by using an IC (Integrated Circuit) card on which information unique to the traveler is recorded and for extracting information of a traveler who has already checked in but has not yet appeared at a departure gate. Moreover, a technology of displaying a guide map of a travel route on a guide terminal installed in a transportation facility in accordance with the information recorded on the IC card.

### PRIOR ART DOCUMENT

### PATENT DOCUMENT

Patent Document 1: Japanese Patent Application Laid-Open No. 10-188056

### SUMMARY OF INVENTION

### PROBLEMS TO BE SOLVED BY INVENTION

While the technology disclosed in Patent Document 1 is able to check the passage of a traveler or baggage at a passage point, it is, however, difficult to prevent the occurrence of delay in traveling, since there is no way to find out whether or not the traveling is being late. Furthermore, because a person who is planning to meet the traveler would not know the travelling situation of the traveler, such as the fact that the traveler passes through a passage point, he/she cannot improve the waiting situation.

The present invention has been devised in the point of view about the above circumstances and has an objective of providing a travel situation detection system that improves a service provided during or after travelling of a person or object, such improvement as reducing the delay in traveling and letting a parson who is planning to meet the traveler know the situation of the traveler so as to improve a waiting situation, by detecting a travel situation of the person or the object in a transportation facility and notifies the situation.

### MEANS FOR SOLVING THE PROBLEMS

A travel situation detection system according to the present invention detecting a situation at a time when a person or object using repeatedly operated transportation travels at a transportation facility is characterized by comprising: a passage time specifying means for specifying passage time at which a person or object passes through each of a plurality of passage points on a route through which the person or object passes at the transportation facility; a means for accumulating passage time specified by the passage time specifying means, with respect to a use condition in which transportation is used by a person or object and with respect to each of the plurality of passage points; a means for individually calculating a statistical representative value of passage time accumulated by the means for accumulating with respect to the use condition and each of the plurality of passage points, or a statistical representative value of passage periods elapsed between two passage points including one of the passage points; a means for storing a statistical representative value of the passage time or of the passage periods calculated by the means for calculating, with respect to the use condition and passage point; and a means for outputing, when the passage time specifying means specifies passage time at which a person or object passes through one passage point, the specified passage time as well as a statistical representative value of passage time stored with respect to the above-described one passage point and a use condition of transportation for the person or object, or a passage period elapsed to the above-described one passage point from another passage point calculated based on the passage time as well as a statistical representative value of passage periods elapsed to the above-described one passage point from the above-described another passage point which is stored with respect to the above-described one passage point and the use condition.

A travel situation detection system according to the present invention detecting a situation at a time when a person or object using repeatedly operated transportation travels at a transportation facility is characterized by comprising: a passage time specifying device which is installed at one passage point or a plurality of passage points on a route through which a person or object passes at the transportation facility and which specifies passage time at which a person or object passes through the passage point; one or a plurality of output devices; and a travel situation detection apparatus connected to the output device and the passage time specifying device, wherein the passage time specifying device includes a means for acquiring identification information for identifying a person or object passing through the passage point, and the travel situation detection apparatus includes: a means for storing use condition specifying information which specifies a use condition at a time when a person or object uses transportation, in association with the identification information of the person or object; a means for storing the passage time specified by the passage time specifying device in association with information indicating a passage point at which the passage time specifying device is installed and in association with the use condition specifying information which is stored and related to the identification information acquired by the passage time specifying device; a means for individually calculating a statistical representative value of passage time which is stored by the means for storing and which is associated with each of a plurality of pieces of use condition specifying information and information indicating passage points; a means for storing a statistical representative value of passage time calculated by the means for calculating, in association with each of a plurality of pieces of use condition specifying information and information indicating passage points; a means for comparing, when the passage time specifying device specifies passage time, the specified passage time with a statistical representative value of passage time stored in association with the information indicating a passage point at which the passage time specifying device is installed and in association with use condition specifying information which is stored and related to the identification information acquired by the passage time specifying device; and a means for making the output device output a result of comparison made by the means for comparing.

In the travel situation detection system according to the present invention, the travel situation detection apparatus further includes: a means for storing output device information indicating a specific output device in association with identification information; and a means for making the specific output device which is indicated by the output device information which is stored in association with the identification information which is acquired by the passage time specifying device output the passage time specified by the passage time specifying device, information indicating a passage point at which the passage time specifying device is installed, and the result of comparison.

In the travel situation detection system according to the present invention, the travel situation detection apparatus further includes: a means for storing route information indicating a travel route through which a person or object is to travel at a transportation facility, in association with identification information of the person or object; a means for determining whether or not a passage point at which the passage time specifying device is installed is on the travel route, based on the route information stored in association with the identification information acquired by the passage time specifying device; and a means for making the output device output information indicating that the travel route is incorrect when the passage point is not on the travel route.

In the travel situation detection system according to the present invention, the passage time specifying device further includes: a means for accepting a request for guidance to a predetermined service at a transportation facility; and a means for outputting information representing a route to the predetermined service, and the travel situation detection apparatus further includes: a means for changing, when the passage time specifying device accepts the request, route information stored in association with the identification information acquired by the passage time specifying device into revised information indicating a new travel route with an additional route from the passage time specifying device to the predetermined service; and a means for making the passage time specifying device output the information representing the route to the predetermined service.

In the travel situation detection system according to the present invention, the passage time specifying device further includes a means for acquiring, when identification information of one person is acquired, identification information of another person or object being with the above-described one person, and the travel situation detection apparatus further includes: a means for storing, in association with identification information of a person, identification information of another person or object supposed to travel with the above-described person; and a means for making the output device output information indicating abnormality when the acquired identification information of the above-described another person or object is different from the identification information stored in association with the identification information of the above-described one person, when the identification information of the above-described another person or object is not stored in association with the identification information of the above-described one person, or when the identification information of the above-described another person or object stored in association with the identification information of the above-described one person is not acquired by the passage time specifying device.

In the travel situation detection system according to the present invention, the travel situation detection apparatus further includes: a means for storing information indicating that an article needs to be handed over or collected, in association with identification information of a person who needs to have the article handed over or collected; a means for determining whether or not the information indicating that an article needs to be handed over or collected is stored in association with the identification information acquired by the passage time specifying device; and a means for making the output device output information indicating that an article needs to be handed over or collected when the information indicating that the article needs to be handed over or collected is stored in association with the identification information.

The travel situation detection system according to the present invention, further comprises a blocking means for blocking a person or object passing through a passage point, wherein the travel situation detection apparatus further includes: a means for storing inspection information related to a person or object to be inspected; a means for storing individual information related to an individual person or object, in association with identification information of the person or object; a means for determining whether or not at least a part of the individual information stored in association with the identification information acquired by the passage time specifying device matches with a part of the stored inspection information; a means for making the blocking means block a person or object passing through a passage point at which the passage time specifying device is installed, when at least a part of the individual information matches with a part of the inspection information; and a means for making the output device output information indicating that inspection is needed.

The travel situation detection system according to the present invention, further comprises a measurement means for taking a radiograph or measuring a weight of an object passing through a passage point, wherein the travel situation detection apparatus further includes: a means for storing a radiograph of an object taken by or a weight of an object measured by the measurement means, in association with the identification information of the object acquired by the passage time specifying device; a means for determining whether or not the radiograph taken by or the weight measured by the measurement means matches with the radiograph or weight stored in association with identification information of the object within a predetermined allowable range; a means for making the blocking means block the object passing through a passage point at which the passage time specifying device is installed when the radiograph taken by or the weight measured by the measurement means does not match with the radiograph or weight stored in association with the identification information of the object within a predetermined allowable range; and a means for making the output device output information indicating that a content of the object is not consistent.

In the travel situation detection system according to the present invention, the passage time specifying device further includes a means for acquiring a plurality of kinds of identification information for identifying a person or object, and the travel situation detection apparatus further includes: a means for storing a combination of a plurality of kinds of identification information; a means for determining, when the passage time specifying device acquires a plurality of kinds of identification information, whether or not the combination of the acquired plurality of kinds of identification information is stored; a means for making the blocking means block the object passing through a passage point at which the passage time specifying device is installed when the combination of the acquired plurality of kinds of identification information is not stored; and a means for making the output device output information indicating that the combination of identification information does not exist.

According to an aspect of the invention, the travel situation detection system detecting a situation of a person or object traveling at a transportation facility specifies passage time at which the person or object passes through a passage point at the transportation facility or a passage period elapsed while a person or object passes through between two passage points and outputs a result of a comparison between the passage time or passage period and a statistical representative value such as a mean thereof. The progress or delay of the passage of the person or object becomes clear to the person or the others such as a worker, store worker and person who is planning to meet the person.

According to another aspect of the invention, the travel situation detection system outputs to a predetermined specific output device a position of a passage point, passage time or a passage period, and a result of a comparison between the passage time or passage period and a statistical representative value. The specific output device makes clear the travel situation of a person or object.

According to another aspect of the invention, the travel situation detection system outputs the fact that the wrong route is taken when a person or object takes a wrong route. This clearly shows that the person or object takes a wrong route.

According to another aspect of the invention, the travel situation detection system guides a route to a prescribed place, such as a restroom, in response to a request from a person. This enables the person to easily find out the route to a prescribed place, such as a restroom, at a transportation facility.

According to another aspect of the invention, the travel situation detection system stores identification information of another person or object that is supposed to travel with a person by associating it with the identification information of the person. The travel situation detection system notifies an abnormality when a wrong person or object is with the person, when another person or object who is supposed to be with the person is not with the person, when another person or object is with a person who is not supposed to be with another person or object. This prevents a traveler, for example, from picking up wrong baggage or from getting separated away from a travelling companion.

According to another aspect of the invention, the travel situation detection system stores identification information of a person who needs to receive or hand over an article by associating it with information indicating that the reception or handover of the article is required. The travel situation detection system issues a notification indicating that reception or handover of the article is required when a person passes through a specific passage point. In accordance with the notification, a worker performs operations, and a person receives an article such as purchased goods or hands over an article such as a disembarkation card.

According to a further aspect of the invention, the travel situation detection system stores information related to a person or object, and inspection information related to a person or object to be inspected. The travel situation detection system acquires identification information of a person or object at a passage point through which the person or object passes, and blocks the passage of the person or object when a part of the information that is related to the person or object and that is identified by the identification information matches with the inspection information. The person or object that was blocked for passing is inspected by a worker.

According to yet another aspect of the invention, the travel situation detection system takes a radiograph of an object or weighs an object, compares the result with the formerly taken radiograph or formerly obtained weight, and blocks the passage of the object when they do not match with each other. This detects a change in object such as replacement of baggage.

According to another aspect of the invention, the travel situation detection system is able to acquire several types of identification information, and if a combination of the acquired several types of identification information does not match with a combination stored in advance, blocks the passage of a person or object. The use of several types of identification information allows strict checking of a person or object.

### EFFECT OF INVENTION

According to the present invention, a travel situation is output so as to motivate a person and a worker who carries an object to move faster and, as a result, to minimize a delay in travelling. Furthermore, when a person who is planning to meet with a traveler sees the output travel situation, the waiting situation is improved. As such, a service provided during or after travelling of a person or object is improved. The present invention, therefore, presents beneficial effects.

### BRIEF DESCRIPTION OF DRAWINGS

Fig. 1 is a conceptual view illustrating the entire configuration of a travel situation detection system;
Fig. 2 is a block diagram illustrating an internal configuration of a travel situation detection apparatus;
Fig. 3 is a flowchart illustrating a procedure of processing in which the travel situation detection apparatus calculates a mean and standard deviation of passage time;
Fig. 4 is a flowchart illustrating a procedure of processing executed by the travel situation detection system at the first passage point;
Fig. 5 is a flowchart illustrating a procedure of a subroutine of inspection processing;
Fig. 6 is a flowchart illustrating a procedure of processing in which the travel situation detection system checks the passage of a traveler at the first passage point;
Fig. 7 is a flowchart illustrating a procedure of processing in which the travel situation detection system checks the passage of a traveler at the second or subsequent passage point;
Fig. 8 is a flowchart illustrating a procedure of inspection processing for baggage;
Fig. 9 is a flowchart illustrating a procedure of processing of guiding a rest room;
Fig. 10 is a flowchart illustrating a procedure of additional processing executed by the travel situation detection apparatus at an arrival place;
Fig. 11 is a flowchart illustrating a procedure of additional processing executed by the travel situation detection apparatus at a departure place;
Fig. 12 is a flowchart illustrating a procedure of guiding for meeting another person; and
Fig. 13 is a flowchart illustrating a procedure of processing in which the travel situation detection apparatus notifies a terminal device or a mobile terminal device of a travel situation.

### BEST MODE FOR CARRYING OUT INVENTION

The present invention will be described below in detail with reference to the drawings illustrating the embodiments thereof.

### Embodiment 1

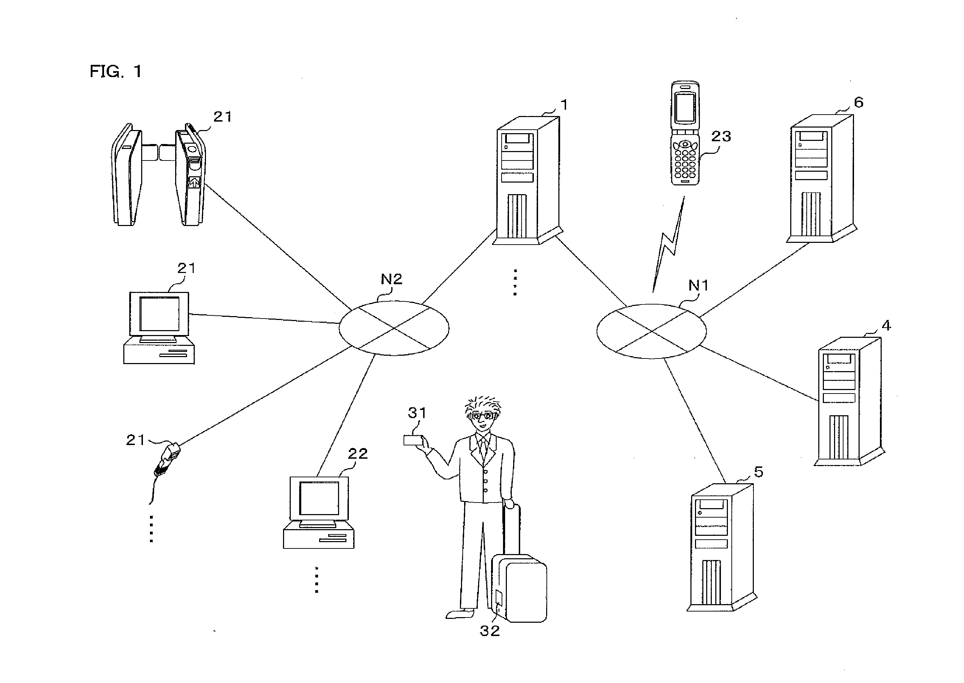

In the present embodiment, the invention will be described with an example of a traveler or baggage using an airplane as a transportation means. In the present embodiment, a mean is used as a statistical representative value. Furthermore, as use condition specifying information in the present invention, flight specifying information for specifying a flight used by a traveler or baggage is used. Fig. 1 is a conceptual view illustrating the entire configuration of a travel situation detection system. A travel situation detection apparatus 1 detecting a situation in which a traveler or baggage travels is connected to a communication network N1 such as the Internet. One or more travel situation detection apparatuses 1 are installed in different airports, respectively. The travel situation detection apparatuses 1 communicate with one another through the communication network N1.

The traveler who uses an airplane holds a ticket 31, while a baggage to be conveyed is attached with a baggage claim tag 32. On the ticket 31, an ID which is identification information for identifying the traveler is recorded. For example, the ticket 31 is a ticket on which a character string or barcode indicating an ID is printed, or an IC card in which electronic data indicating an ID is stored. Likewise, an ID which is identification information of baggage is recorded in the baggage claim tag 32.

In an airport, which is a transportation facility, there are several passage sites (passage points) through which a traveler or baggage passes, such as a check-in counter, a baggage check-in counter, a security inspection, a boarding gate, a baggage discharging area, baggage collecting area, a disembarking site, an arrival counter, a baggage claim area, an arrival gate and the like. At each passage point, check machines (passage time specifying devices) 21, 21, ... are installed for reading an ID from the ticket 31 or baggage claim tag 32 and for specifying the passage time at which the traveler or baggage passes through. The check machine 21 may be, for example, a ticketing device that issues a ticket 31 or a baggage claim tag 32, or a barcode reader connected to a computer to read a barcode printed on the ticket 31 or baggage claim tag 32. Alternatively, the check machine 21 may be a ticket gate machine that can read an ID recorded in the ticket 31, display necessary information and record the necessary information. Moreover, the check machine 21 may be an input device for inputting information such as an ID of the ticket 31 by an operator performing operations. It is noted that the check machines 21 may also acquire information related to date and time, e.g. a date, in addition to time. Some check machines 21, 21, ... may be provided with gates which block the traveling of a traveler or baggage as needed. The check machine 21 provided with the gate also serves as a blocking means in the present invention. Note that the gate to block the traveling of a traveler or baggage may also be installed separately from the check machine 21.

The check machine 21 includes an input unit to input information by worker performing operation and an output unit to output information, such as a display or a speaker. The check machine 21 also serves as an output device in the present invention. Alternatively, the check machine 21 may be provided with a help button for a traveler who asks for help or guidance by pressing it down. Moreover, the check machine 21 may be installed at all diverging points along a route through which a traveler or baggage passes, or may be installed at all dispatched places on the route where workers are deployed. Furthermore, in an airport, a route may be constructed with fences or gates such that a traveler or baggage passes through all the necessary check machines 21 on each route without fail.

The check machines 21, 21, ... installed in an airport are connected to the travel situation detection apparatus 1 through a communication network N2 provided in the airport. The travel situation detection apparatus 1 uses the check machine 21 to detect the travel situation of a traveler or baggage passing through a passage point at which the check machine 21 is placed. Each check machine 21 transmits information acquired and generated in inspection to the travel situation detection apparatus 1, which stores the received information. Note that the travel situation detection apparatus 1 may be included in each check machine 21. In such a form, the check machine 21 communicates with the travel situation detection apparatus 1 without the network N2, the time for the communication is reduced, and the processing speed is enhanced.

Moreover, the travel situation detection apparatus 1 is connected through the communication network N2 to a plurality of terminal devices 22, 22, ... used by workers who perform operations in an airport or an airplane. The terminal device 22 is an output device in the present invention. The communication network N2 may include a wireless communication network. The terminal device 22 is provided with an output unit to output information, such as a display. The terminal device 22 may take a portable form used by a worker or a form installed in a place where a worker stands by, such as an office. In addition, the terminal device 22 may also be provided with an input unit such as a keyboard. As will be described later, when specific processing is performed at the check machine 21, the terminal device 22 performs processing of outputting information at the output unit in accordance with the specific processing.

Furthermore, the travel situation detection apparatus 1 is able to communicate with a mobile terminal device 23 such as a mobile phone. The mobile terminal device 23 is an output device in the present invention. The mobile terminal device 23 is, for example, a mobile phone set owned by an individual. In the travel situation detection apparatus 1, output device information which indicates the mobile terminal device 23, such as an e-mail address, is registered. The travel situation detection apparatus 1 transmits information to the mobile terminal device 23 based on the registered output device information, and the mobile terminal device 23 outputs the information. It is noted that the travel situation detection apparatus 1 may also transmit information to the mobile terminal device 23 through the communication network N2.

Moreover, the communication network N1 is connected to a transportation information storage device 4 storing information related to operations of an airplane. The transportation information storage device 4 is provided for each airline company. The transportation information storage device 4 is connected to a database managing the operations of an airplane through a communication network (not shown), and stores latest information transmitted from the database. Note that the transportation information storage device 4 may be constituted by the database. The transportation information storage device 4 stores, for each operating flight, flight specifying information specifying each flight. For example, as the flight specifying information, a flight number including the name of an airline, a flight type such as a regular flight or charter flight, the name of a departure place, the name of an arrival place, a scheduled date/time of departure and a scheduled date/time of arrival is registered. For example, the flight specifying information may also include an airplane type, passenger capacity and the rate of vacant seats that are normally included in reservation information which will be described later.

Furthermore, the transportation information storage device 4 stores information related to airport facilities involving a flight and a traveler or baggage by associating them with the flight specifying information. The information related to airport facilities involving a flight corresponds to information related to facilities at the airport directly or indirectly used by the flight. The information related to airport facilities involving a flight includes information indicating a terminal number, a gate number, the number of workers, departure/arrival date and time and the like. In addition, information indicating a worker ID for identifying a worker at the airport and the number of workers are also included. The information related to airport facilities involving a traveler or baggage corresponds to information related to facilities at an airport directly or indirectly used by the traveler or baggage. The information related to the airport facilities involving a traveler or baggage includes a number for a ticketing counter, a number for security inspection, a number for emigration, a number for quarantine and a number for immigration. The information further includes a number for a traveler's travelling route or a baggage conveying route, a number for a baggage claim, a number for each of the other facilities in the route, information indicating the number of workers, the information indicating sequence of the facilities on a passage, and worker's ID. Note that the information related to airport facilities, security, quarantine, emigration/immigration and customs inspection may directly be obtained from a database (not shown) managed by specific organizations, respectively. Also, an airline company normally stores weather information in a database (not shown) for each airport of departure and arrival of airplanes, and provides pilots, workers and the like with the weather information. The transportation information storage device 4 may have a form connected to the database to obtain the weather information for each airport of departure and arrival of a flight as a part of the information related to airport facilities.

Furthermore, the transportation information storage device 4 stores, for each traveler, reservation information indicating the contents of reservation made by a specific traveler for a specific flight. The reservation information includes an ID which is identification information of a traveler, as well as personal information of the traveler such as the name, age, gender, e-mail address and nationality of the traveler. The personal information of a traveler corresponds to individual information. Moreover, the reservation information includes at least a part of the flight specifying information specifying a flight to be used by a traveler, such as the name of a departure place, the name of an arrival place, the flight number of a flight to be used, and scheduled date/month/year of departure, which are associated with each other. The flight specifying information corresponds to transportation specifying information. The reservation information also includes information indicating use condition in which the traveler uses an airplane, such as a type of a seat, e.g., coach or business class, a seat number or the number of baggage. The reservation information further includes route information indicating a travelling route on which a traveler is supposed to travel in an airport, such as a place of a passage point where the traveler identified by an ID passes through in the airport, the sequence of passage points to be passed through, and an ID of the check machine 21 installed at each passage point. The reservation information also includes information indicating presence/absence of a person who travels with the traveler (hereinafter also referred to as "companion"), and if there is a companion, it includes an ID of the companion. The reservation information may further include information on the terminal device 22 or mobile terminal device 23 which is notified of a travel situation, traveler's personal information for notification which is sent together with the travel situation, information on the check machine 21 which obtains the travel situation for the notification, and information related to a period and timing at which the travel situation is notified. The reservation information is stored in the transportation information storage device 4 at the time when the reservation is made. If information, such as route information, among the information included in the reservation information is not determined at the time when the reservation is made, every time the information is determined, the determined information is additionally stored in the reservation information.

Furthermore, the communication network N1 is connected to the inspection information storage device 5 storing inspection information related to a traveler or baggage to be inspected. The inspection information storage device 5 obtains and stores inspection information from a database (not shown) managed by an administrative institution, a judicial institution or an enterprise in each of different countries. The inspection information includes, for example, the "No Fly List" held by TSA (Transportation Security Administration) of the United States or a list of crime suspects held by FBI (Federal Bureau of Investigation). The inspection information also includes personal information such as the name, nationality, address or religion of a suspicious person such as a crime suspect, and if there is an ID for the suspicious person, it includes the ID. The inspection information storage device 5 stores information such as an ID of the database from which the inspection information is obtained, a date of information update or an ID of a person who updated the information by associating them with the inspection information. The communication of the information to be stored in the inspection information storage device 5 needs enhanced security. For example, the communication may be performed with a dedicated communication network. For example, information may be acquired using a recording medium such as an optical disk without the use of the communication network. Moreover, the inspection information storage device 5 may be configured by the database itself managed by an administrative institution or the like in a country.

Moreover, the communication network N1 is connected to a product information storage device 6 which stores goods information related to goods sold to a traveler. The goods information includes, for example, an ID of sold goods, an ID of the check machine 21 which inspected the goods, an ID of a traveler who purchased the goods, an ID of a sales person who sold the goods, the name of the goods, amount, price, date of sales and place of production, which are associated with each other. The ID of the goods may be the ID of baggage. The goods information is acquired by a terminal device (not shown) used by a sales person in an airport or airplane, and is transmitted to the product information storage device 6 through a communication network (not shown). The product information storage device 6 transmits goods information to the travel situation detection apparatus 1 through the communication network N1 at predetermined intervals or every time the goods information is updated. The travel situation detection system may also include more than one product information storage device 6. For example, the product information storage device 6 may be installed for each area, airport or airline. Moreover, the product information storage device 6 may be configured with a computer used by a sales person. Furthermore, there may be the model that the product information storage device 6 is included in the inspection information storage device 5.

It is noted that the travel situation detection system may have a form not including the inspection information storage device 5 or product information storage device 6. In such a form, a worker may input inspection information or goods information using an input device (not shown) to the travel situation detection apparatus 1, which stores the input information therein.

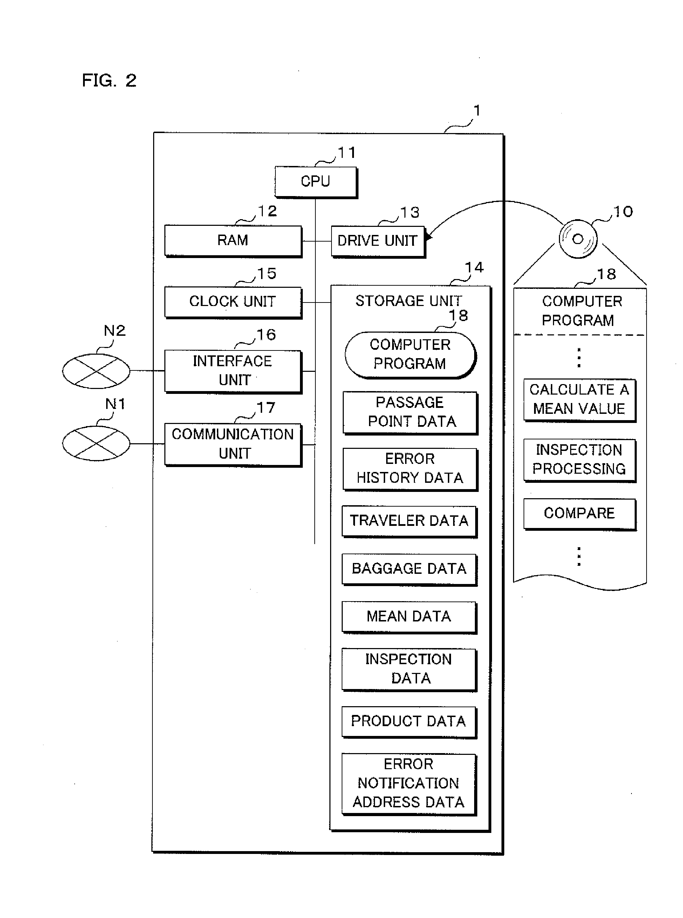

Fig. 2 is a block diagram illustrating the internal configuration of the travel situation detection apparatus 1. The travel situation detection apparatus 1 is configured with a general-purpose computer such as a server device. The travel situation detection apparatus 1 is provided with a CPU (Central Processing Unit) 11 performing arithmetic operation, a RAM (Random Access Memory) 12 storing temporary data generated along with the arithmetic operation, a drive unit 13 reading information from the recording medium 10 such as an optical disk and a non-volatile storage unit 14 such as a hard disk. The travel situation detection apparatus 1 is also provided with a clock unit 15 obtaining date and time, an interface unit 16 connected to the communication network N2 in an airport and a communication unit 17 connected to the communication network N1. The CPU 11 makes the drive unit 13 read a computer program 18 recorded in the recording medium 10 and makes the storage unit 14 store the read computer program 18. The computer program 18 is loaded from the storage unit 14 to the RAM 12 as required. The CPU 11 executes processing necessary to the travel situation detection apparatus 1 based on the loaded computer program 18. Note that the computer program 18 may alternatively be downloaded from another server device (not shown) connected to the communication network N1. Moreover, the clock unit 15 may also be provided in the check machine 21.

The storage unit 14 stores passage point data which records information related to several check machines 21, 21, ... installed at the respective passage points in the airport. For example, an ID of the check machine 21, a name of the check machine 21, a place of the passage point, and a distance on the route from a predetermined reference point to a passage point are recorded in the passage point data for each passage point. The storage unit 14 stores error history data which record error information which indicates that error processing is performed in each check machine 21. In the error history data, error information is recorded by associating it with the ID of the check machine 21, ID of the checked traveler or baggage, and the flight specifying information. The error information includes details of the processing performed by the check machine 21, details of the error, and date and time when the error processing is performed.

The storage unit 14 also stores therein traveler data related to a traveler. The traveler data includes an ID of the traveler, personal information of the traveler, information indicating presence/absence of a companion, an ID of a companion and the like. The personal information of the traveler corresponds to individual information. Furthermore, the traveler data includes travel progress data in which the date and time when the traveler passes through each passage point are recorded. The traveler data also includes flight specifying information specifying a flight used by a traveler, route information indicating a route taken by a traveler in an airport. It further includes information on the terminal device 22 or mobile terminal device 23 which is notified of a travel situation, traveler's personal information for notification which is sent together with the travel situation, information on the check machine 21 which acquires the travel situation for the notification, and information related to a period and timing at which the travel situation is notified. These pieces of information related to the traveler are associated with each other. Likewise, the storage unit 14 stores baggage data related to baggage. The baggage data includes an ID of baggage and personal information of the owner of baggage, as well as individual information such as information indicating a source and destination of the shipment of baggage. The baggage data similarly includes, for example, travel progress data, flight specifying information and route information. Also included are: information on the terminal device 22 or mobile terminal device 23 which is notified of a travel situation of baggage; baggage sender's personal information which is sent together with the travel situation; information on the check machine 21 which acquires the travel situation for a notification, and information related to a period and timing at which the travel situation is notified. These pieces of information related to baggage are associated with each other.

Moreover, the storage unit 14 stores inspection data in which inspection information is recorded. Inspection information is transmitted from the inspection information storage device 5 to the travel situation detection apparatus 1 through the communication network N1 at predetermined intervals or every time information stored in the inspection information storage device 5 is updated, and is recorded at the inspection data. Note that the travel situation detection apparatus 1 may acquire the inspection information by using a recording medium such as an optical disk or the like without the use of the communication network N1.

Furthermore, the storage unit 14 stores product data in which goods information is recorded. The travel situation detection apparatus 1 acquires goods information transmitted from the product information storage device 6 through the communication network N1 and records it at the product data. The goods information may also be acquired from sources other than the product information storage device 6. For example, the worker may input goods information to the product information storage device 6 using the check machine 21. The goods information may further be input from a terminal device (not shown) used by a sales person of goods to the travel situation detection apparatus 1 through a communication network (not shown).

Furthermore, the storage unit 14 stores error notification address data indicating a specific terminal device 22 to which error information is to be transmitted when error processing is performed by the check machine 21. The error notification address data includes a type of error, an ID of the check machine 21, and an ID of the terminal device 22 to which the error information is to be transmitted. They are recorded in association with each other.

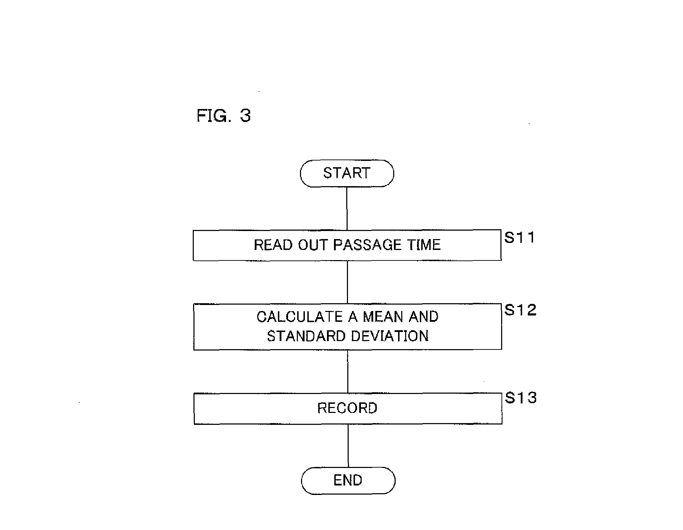

Furthermore, the storage unit 14 stores therein mean data which records a mean and standard deviation of passage time when a traveler or baggage passes through each passage point. The travel situation detection apparatus 1 regularly performs processing of calculating, for each passage point and airline, a mean and standard deviation of passage time at which a traveler or baggage passes through the respective passage points. Fig. 3 is a flowchart illustrating a procedure of processing in which the travel situation detection apparatus 1 calculates a mean and standard deviation of passage time. The CPU 11 reads out passage time at which a traveler or baggage passes through each passage point from traveler data and baggage data at a predetermined time, for example, 1:00 a.m. every day (S11). Here, the CPU 11 reads out the flight specifying information associated with the passage time. The CPU 11 calculates a mean and standard deviation of passage time associated with the same flight specifying information among the passage time at the same passage points in order to calculate the mean and standard deviation of the passage time at each passage point for each flight specifying information (S12). Here, if a time around midnight is included in the read-out passage time, the CPU 11 conducts calculation such that the chronological relationship between the passage time is accurately maintained. For example, the CPU 11 reads out date information together with passage time, and calculates the mean and standard deviation by adding 24:00 to the passage time after midnight based on the date information. If the obtained mean exceeds 24:00, the CPU 11 subtracts 24:00 from the obtained mean.

The CPU 11 records the mean and standard deviation of the calculated passage time at the mean data by associating them with the information indicating each passage point, such as the ID of the check machine 21, and the flight specifying information (S13), and terminates the processing. At the mean data stored in the storage unit 14, the latest mean and standard deviation are recorded. It is noted that the travel situation detection apparatus 1 may reduce or increase the period for which the mean and standard deviation are calculated more/less than a day. The travel situation detection apparatus 1 may also have a form configured by more than one computer. Note that the flight specifying information used when the CPU 11 calculates or records a statistical representative value, such as a mean or standard deviation, corresponds to one piece of the use condition specifying information which specifies the use condition in which a traveler or baggage uses a transportation. The use condition specifying information includes information obtained by the check machine 21 and the travel situation detection apparatus 1, and excludes a traveler's ID, a baggage ID, mean data and a computer program.

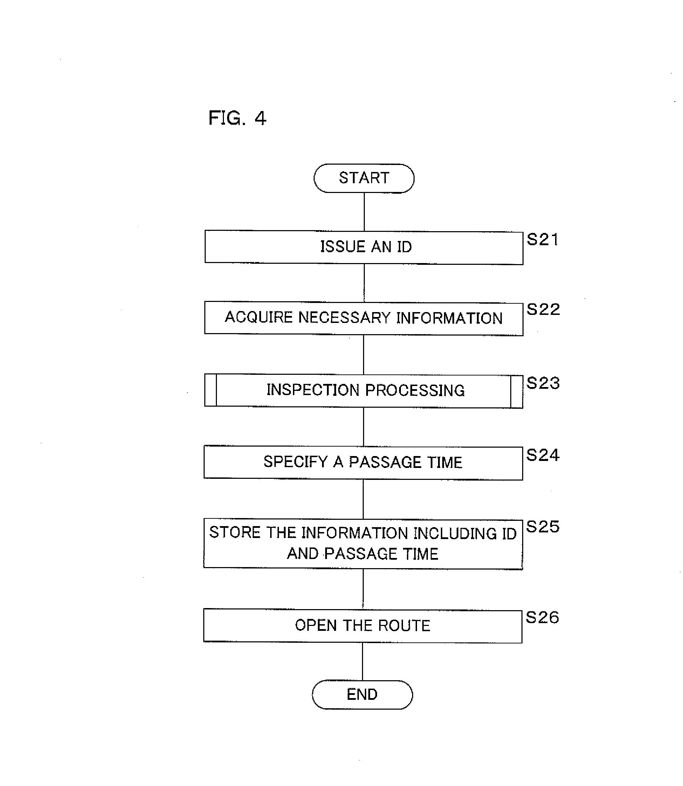

Next, processing executed by the travel situation detection system is described. The traveler without an ID recorded in the ticket 31 needs to have an ID issued at the first passage point such as a check-in counter. Fig. 4 is a flowchart illustrating a procedure of processing executed by the travel situation detection system at the first passage point. The check machine 21 such as a ticketing device issues an ID for identifying a traveler, by a method of, for example, issuing a ticket 31 in which a new ID is recorded (S21). The check machine 21 and travel situation detection apparatus 1 subsequently performs processing of acquiring information necessary for the traveler to use an airplane and information necessary for the processing performed at the travel situation detection apparatus (S22). Note that the check machine 21 may perform the processing of steps S21 and S22 in reverse order.

At step S22, when a reservation for a flight is made for example, the travel situation detection apparatus 1 performs processing of acquiring the reservation information from the transportation information storage device 4 through the communication network N1. More specifically, the CPU 11 makes the communication unit 17 transmit an instruction for searching the reservation information based on a reservation number or the like to the transportation information storage device 4, which transmits the reservation information found in accordance with the instruction for searching to the travel situation detection apparatus 1. The travel situation detection apparatus 1 receives the reservation information at the communication unit 17. If no reservation is made, a worker or the traveler him/herself operates the check machine 21 such as a ticketing device, so that the check machine 21 can accept flight specifying information and information related to the traveler. The information related to the traveler includes personal information of the traveler such as the name, age and language used, as well as information indicating use condition for the traveler to use the flight such as a seat number. The information also includes information on the terminal device 22 or mobile terminal device 23 to be notified of the travel situation. This information corresponds to, for example, information on the mobile terminal device 23 owned by a person who is planning to meet the traveler and whom the traveler wishes to notify of the travel situation. Furthermore, the information related to the traveler includes traveler's personal information for notification which is sent together with the travel situation, information on the check machine 21 which acquires the travel situation for the notification, and information related to a period and timing at which the travel situation is notified. The information on the check machine 21 is, for example, information specifying the check machine 21 acquiring the travel situation of which the traveler wants to notify, when a specific terminal device 22 or mobile terminal device 23 is to be notified of the travel situation acquired by a specific check machine 21 among multiple check machines 21. It is noted that the CPU 11 may perform, after receiving a part of the flight specifying information, the processing of acquiring the remainder of the flight specific information from the transportation information storage device 4 through the communication network N1. Furthermore, the CPU 11 acquires the remaining information associated with the acquired flight specific information from the transportation information storage device 4. The information acquired from the transportation information storage device 4 includes route information indicating a route taken by a traveler. Note that the information acquired by the CPU 11 from the transportation information storage device 4 is a duplicate of latest information.

At step S22, the CPU 11 may perform processing of making an output unit of the check machine 21 output the acquired information such as reservation information in order for the traveler to confirm the information. Here, the CPU 11 makes the check machine 21 output the information using a language matching with the language used by the traveler which is included in the acquired information. Moreover, the check machine 21 may accept an instruction for changing information by getting the operation of a worker or a traveler. For example, the traveler can change a travel schedule. When the check machine 21 receives the instruction for changing, the CPU 11 acquires the changed information and records error information indicating that the acquired information has been changed in error history data. Furthermore, the check machine 21 can accept an approval of the information by getting the operation of a worker or traveler. When the approval of information is accepted by the check machine 21, the CPU 11 acquires information indicating that there is no change. Note that the processing such as a change or approval of information, such as the reservation information, may also be performed not only by the check machine 21 at the first passage point but also by another check machine 21. When the change in the travel schedule is received, the CPU 11 associates the change information indicating the details of change with the traveler's personal information such as a reservation number and transmits it to the transportation information storage device 4. The transportation information storage device 4 updates information which has been stored in association with the same personal information as the received personal information.

The travel situation detection apparatus 1 which acquired information at step S22 transmits the acquired information to another travel situation detection apparatus 1 through the communication network N1, which acquires the transmitted information. That is, at step S22, all travel situation detection apparatuses 1 acquire the same information. It is noted that, after one travel situation detection apparatus 1 acquires information, the travel situation detection system may transmit the acquired information to another travel situation detection apparatus 1 installed at places of departure, transfer and arrival of a traveler or baggage. In this form, multiple travel situation detection apparatus 1 related to the travel route of the traveler or baggage acquires the same information. Furthermore, the travel situation detection system may have a form in which a single travel situation detection apparatus 1 performs processing of acquiring information at step S22. In this form, the information acquired and stored by one travel situation detection apparatus 1 can be shared with another travel situation detection apparatus 1 through the communication network N1 as needed.

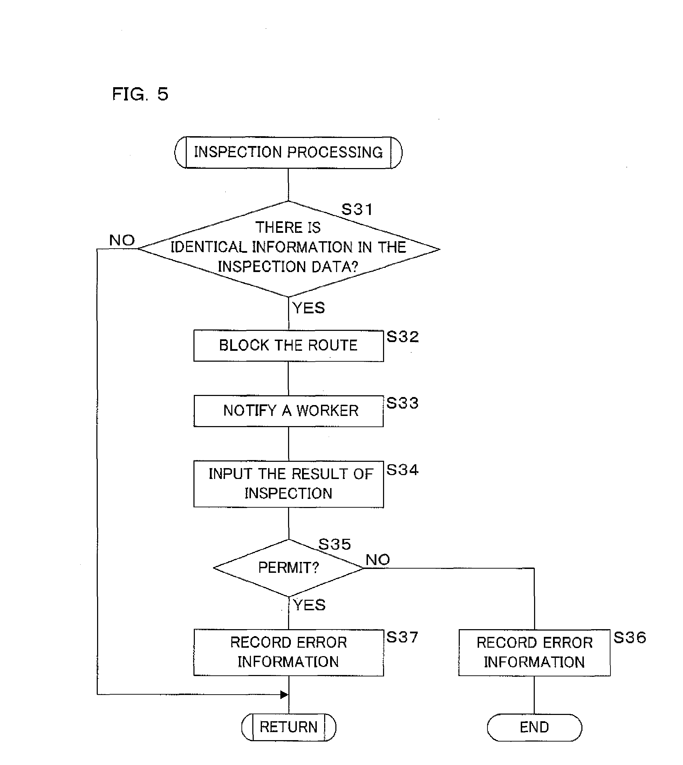

The CPU 11 next performs inspection processing for sorting out a person designated as a suspicious person from travelers and inspecting the person (S23). Fig. 5 is a flowchart illustrating a procedure of a subroutine of inspection processing. The CPU 11 compares the inspection information included in the inspection data stored in the storage unit 14 with information related to a traveler and determines whether or not there is identical information (S31). For example, the CPU 11 determines whether or not the acquired information or the personal information associated with travelers' IDs included in the traveler data stored in the storage unit 14 includes information that matches with the personal information of a suspicious person. If the information related to traveler includes infomration that matches with the inspection information (S31: YES), the CPU 11 blocks the route of the traveler by keeping the gate of the check machine 21 closed (S32). Note that the travel situation detection system may block an original route at step S32 and may guide the traveler to a different route dedicated to inspection. Furthermore, the travel situation detection system may also block a route by using a gate provided separately from the check machine 21. The CPU 11 subsequently performs processing of notifying a worker that the traveler needs inspection (S33). At step S33, the CPU 11 makes the check machine 21 that is set in advance and is operated by a worker output a message of requesting a worker who is to be sent for inspection, such as "Please send an inspector," and also output the ID or place of installation of the check machine 21 that made the determination, as well as the traveler's personal information. The CPU 11 may also transmit similar information to the terminal device 22 associated with the check machine 21 that made the determination at the error notification address data.

The worker who is notified of the information conducts inspection such as body check or questioning for the traveler and inputs the result of the inspection by operating the check machine 21 (S34). The CPU 11 next determines whether or not the input result of inspection is to permit the passage of the traveler (S35). If the result of inspection by the operator is not to permit the passage of the traveler (S35: NO), the CPU 11 records error infomration including the result of determination at step S31 and the result of inspection by the operator at the error history data (S36), and terminates the processing. The gate of the check machine 21 will not be opened and thus the traveler cannot pass the passage point.

If the result of inspection by the worker at step S35 is to permit the passage of the traveler (S35: YES), the CPU 11 records the error information including the result of determination at step S31 and the result of inspection by the worker at the error history data (S37). If step S37 is completed or if the information matching the inspection information at step S31 is not included (S31: NO), the CPU 11 terminates a subroutine of the inspection processing and returns to the main processing.

The CPU 11 specifies passage time at which the traveler passes through the first passage point such as a check-in counter in accordance with the date and time measured by the clock unit 15 (S24). The CPU 11 subsequently records at the traveler data the acquired information including the IDs of the traveler and the above check machine 21, the content of determination indicating that there is no error and the passage time so as to store them in association with each other in the storage unit 14 (S25). The CPU 11 makes the check machine 21 open the gate to open the route for the traveler (S26). This allows the traveler to pass through the passage point. The check machine 21 confirms the passage of the traveler by using an optical sensor or the like, and then closes the gate. It is noted that the check machine 21 may have a form of having the gate keep opened and shut the gate when the traveler trying to pass through the passage point is detected. Moreover, the travel situation detection system may use a gate installed separately from the check machine 21 and open the route. Furthermore, the check machine 21 such as a ticketing device records a part or all of the acquired information in the ticket 31. The travel situation detection apparatus 1 and the check machine 21 thus terminate the processing executed at the first passage point.

The travel situation detection apparatus 1 compares the personal information of the traveler with the inspection information, to make it possible to distinguish a suspicious person from general travelers. This allows a worker to inspect the distinguished suspicious person thoroughly and to apply a simple examination to normal travelers, such as making travelers go through a metal detector. Since the majority of travelers are not suspicious, the above technique can shorten the inspection time for the majority of travelers and results in shortening the time for traveling. This also prevents the travelers from feeling uncomfortable when he/she goes through a strict inspection. Moreover, separation of a suspicious person at the first passage point such as an entrance of an airport can prevent a trouble such as terrorism in the airport beforehand. Furthermore, if a suspicious person is distinguished at a passage point immediately before the customs inspection in the airport, a traveler with a history of smuggling or failure in declaration can be separated from other travelers, so that customs can be separate inspection levels and realize efficient customs inspection. If such a method of distinguishing a suspicious person from other travelers and focusing the inspection on the person as in the present invention becomes widespread, it is recognized that a suspicious person is forced to undergo a strict inspection, and a crime deterrent effect is obtained.

Also in the case of baggage, the travel situation detection apparatus 1 and the check machine 21 execute similar processing. At the first passage point such as a baggage check-in counter, the check machine 21 such as a ticketing device issues the ID for identifying the baggage by issuing a baggage claim tag 32 in which a new ID is recorded. At step S22, the travel situation detection apparatus 1 and check machine 21 also acquire flight specifying information and information associated with the flight specifying information by, for example, reading out the information concerning the traveler who owns the baggage based on the ID of the traveler. Furthermore, the worker or traveler operates necessary equipment to acquire other necessary information such as the size, weight, content and radiograph of the baggage, and inputs the acquired information in the check machine 21. The check machine 21 may have a form of including equipment automatically acquiring such information.

The CPU 11 next conduct inspection processing at step S23. The CPU 11 determines at step 31 whether or not the acquired information includes information matching with the inspection information included in the inspection data stored in the storage unit 14. The CPU 11, for example, determines whether or not the personal information of the owner of the baggage includes information matching with the personal information of a suspicious person. Alternatively, the CPU 11 determines whether or not the information indicating an origin or a destination of the baggage includes information matching with the inspection information. If the acquired information does not include information matching with the inspection information, the CPU 11 returns to the main processing. If the acquired information includes information matching with the inspection information, the CPU 11 halts at step S32 a conveying device of the baggage to block the route of the baggage. It is noted that the travel situation detection system may block the original route at step S32 while conveying the baggage to a dedicated route for inspection. The CPU 11 subsequently makes an output unit of the check machine 21 operated by a worker output information of notifying that the baggage needs inspection. Alternatively, the CPU 11 transmits information indicating that the baggage needs inspection to the terminal device 22 associated, at the error notification address data, with the check machine 21 that made determination. This information includes a message indicating that the baggage inspection is required, the ID or place of the installed check machine 21 which made the determination, and the ID of the baggage.

The notified worker conducts a thorough inspection by, for example, opening the baggage and checking the content, and inputs the result of inspection at step S34 by operating the check machine 21. The CPU 11 determines at step S35 whether or not the result of inspection is to permit the passage of baggage. If the result of inspection is not to permit the passage of baggage, the CPU 11 records, at step S36, the error information including the result of determination at step S31 and the result of inspection at the error history data and terminates the processing. The conveying device does not convey the baggage and thus the baggage cannot pass through the passage point. If the result of inspection is to permit the passage of baggage, the CPU 11 records at step S37 the error information including the result of determination at step S31 and the result of inspection by the worker at the error history data and returns to the main processing.

The CPU 11 specifies the passage time of the baggage at step S24, and records at step S25 at the baggage data the acquired information including the IDs of the baggage and check machine 21, the content of determination indicating that there is no error and the passage time by associating them with each other in the recording unit 14. The CPU 11 then opens, at step S26, the route of the baggage by, for example, making the baggage conveying device operate. Note that the check machine 21 records a part or all of the acquired information in the baggage claim tag 32 as needed.

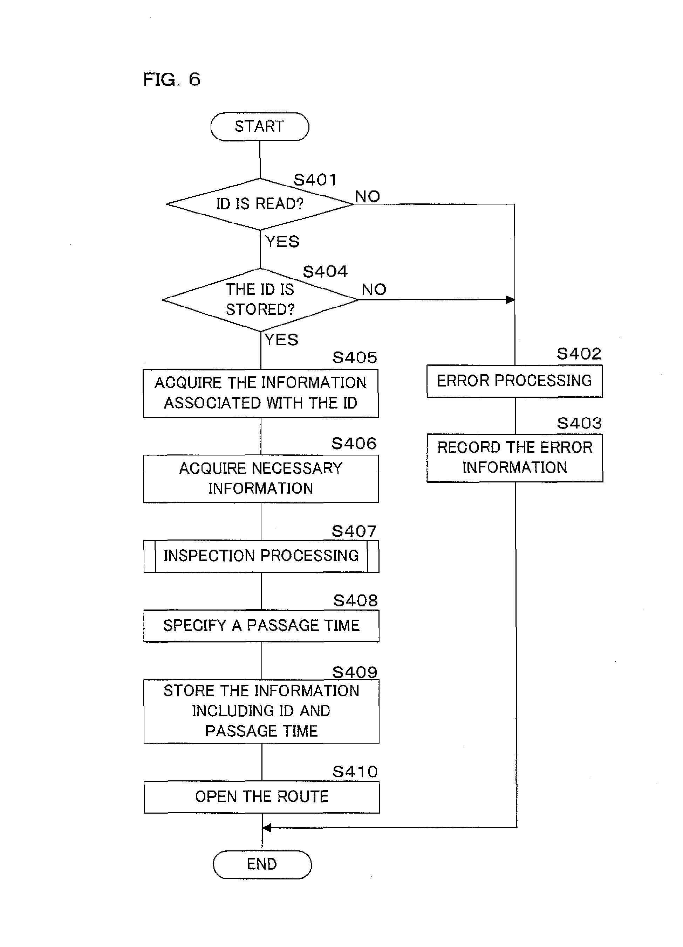

In the case where the traveler passes through the first passage point while holding an already-issued ID, such as the case where the traveler holds the ticket 31 in which the ID has already been recorded, the travel situation detection apparatus 1 and check machine 21 performs processing of checking the passage by using the ID. Fig. 6 is a flowchart illustrating a procedure of processing in which the travel situation detection system checks the passage of a traveler at the first passage point. The check machine 21 such as a terminal device at a check-in counter performs processing of reading the ID recorded in the ticket 31 to determine whether or not the ID is read (S401). If the reading of the ID fails (S401: NO), the CPU 11 performs error processing (S402). At the error processing at step S402, the CPU 11 outputs an error message such as "ID cannot be read" by using, for example, a speaker or display of the check machine 21, and executes the processing of reading the ID again. Furthermore, the CPU 11 may perform processing of reissuing the ID. The CPU 11 then records the error information in the error history data (S403) and terminates the processing. At step S403, the error information is recorded in association with a reissued ID or a predetermined ID indicating the failure of ID reading.

If the ID is successfully read at step S401 (S401: YES), the CPU 11 determines whether or not the read ID is stored in the transportation information storage device 4 as a reserved ID (S404). If the read ID is not stored in the transportation information storage device 4 as the reserved ID (S404: NO), the CPU 11 proceeds to step S402. Here, the CPU 11 may perform processing of outputting a message indicating, for example, that "there is no reservation with this ID" by using the check machine 21 or terminal device 22, and blocking the route as in step S32. If the read ID is stored in the transportation information storage device 4 as a reserved ID (S404: YES), the CPU 11 performs processing of acquiring the information associated with the ID from the transportation information storage device 4 through the communication network N1 (S405). The information to be acquired includes flight specifying information.

The CPU 11 subsequently performs processing of acquiring information not acquired when the reservation is made among the information necessary for the traveler to use the airplane (S406). That is, the CPU 11 accepts missing information among the necessary information such as the flight specifying information, information related to traveler and baggage and information indicating use condition of the flight. The CPU 11 acquires the information specifying a facility and a worker in the airport to be used as well as the information specifying passage points through which the traveler is supposed to or able to pass and the sequency of passage. Furthermore, the CPU 11 acquires, as needed, information of a person to be notified of the travel situation, such as a person who is planning to meet the traveler during his/her travel or at an arrival place, information on the check machine 21 which acquires the travel situation for the notification, information related to a period and timing at which the travel situation is notified, and traveler's personal information for notification which is to be notified with the travel situation. The CPU 11 also acquires, as needed, information related to the travel history, information related to the religion of the traveler, or information indicating whether or not the traveler is provided with an immigration card. The CPU 11 further acquires, as needed, goods information associated with the ID of the traveler from the product information storage device 6.

The CPU 11 then performs the inspection processing (S407). The content of the inspection processing at step S407 is similar to that described with reference to the flowchart in Fig. 5. After the inspection processing at step S407 is completed, the CPU 11 specifies passage time at which the traveler passes through the first passage point in accordance with the date and time measured by the clock unit 15 (S408). The CPU 11 next stores the acquired information including the IDs of the traveler and the above check machine 21, the name of the item having no error and the results before and after the determination as well as the passage time at the traveler data in order to store them in association with each other in the storage unit 14 (S409). The CPU 11 subsequently opens the route for the traveler by making the check machine 21 open the gate (S410). This allows the traveler to pass through the passage point. Thus, the travel situation detection apparatus 1 and the check machine 21 end the processing of checking the passage of traveler at the first passage point. In addition, the check machine 21 such as a ticketing device records a part or all of the acquired information in the ticket 31 as needed.

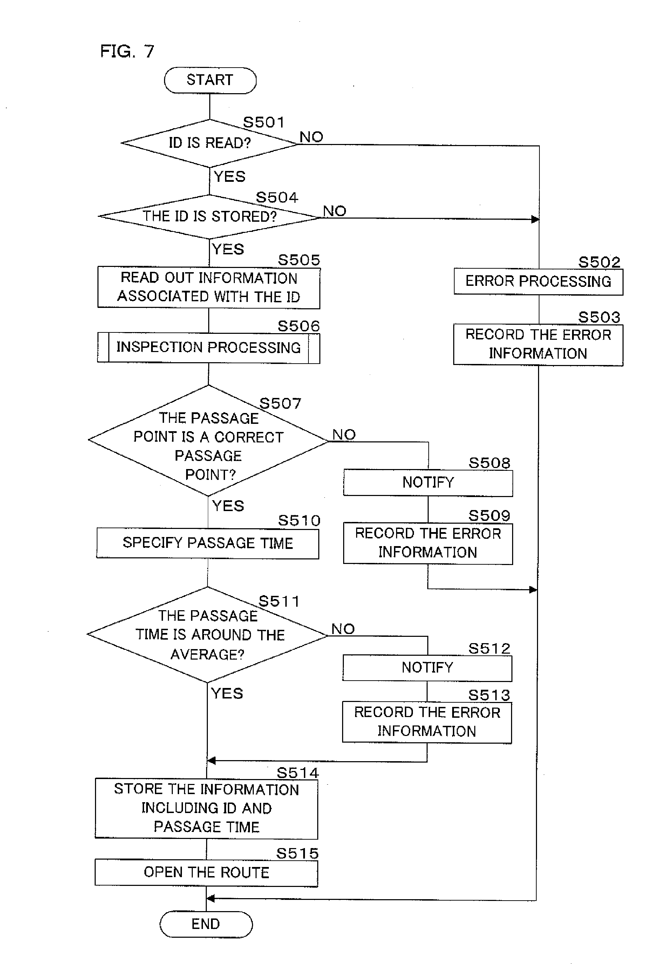

At each of the second and subsequent passage points, the travel situation detection apparatus 1 and the check machine 21 performs processing of checking the passage of the traveler or baggage. Fig. 7 is a flowchart illustrating a procedure of processing in which the travel situation detection system checks the passage of a traveler at the second or subsequent passage point. The check machine 21 performs the processing of reading the ID recorded in the ticket 31 or baggage claim tag 32 to determine whether or not the ID has been read (S501). If reading of ID is failed (S501: NO), the CPU 11 performs error processing (S502). In the error processing at step S502, the CPU 11 makes, for example, the output unit of the check machine 21 output an error message such as "ID cannot be read," and executes the processing of reading the ID again. The CPU 11 may also execute the processing of forcibly prohibiting the passage of the traveler or baggage along with the processing performed at step S502. If, for example, the check machine 21 is a ticket gate, the CPU 11 performs the processing of having the ticket gate close the pathway. Furthermore, if the ID cannot be read in the middle of a conveyor path on which the baggage is conveyed for example, the CPU 11 performs the processing of stopping the conveyance of the baggage. Moreover, the CPU 11 may also perform processing of making another check machine 21 used by a worker or the terminal device 22 associated, at the error notification address data, with the check machine 21 that made the determination output information indicating an error. The CPU 11 next records the error information at the error history data (S503) and ends the processing. At step S503, the CPU 11 records the error information by associating it with a predetermined ID indicating the failure in ID reading.

If the ID is successfully read at step S501 (S501: YES), the CPU 11 determines whether or not the read ID is recorded at the traveler data or baggage data stored in the storage unit 14 (S504). At step S504, the CPU 11 may conduct a search for the traveler data or baggage data stored in the storage unit 14 of another travel situation detection apparatus 1 through the communication network N1. If the read ID is not recorded (S504: NO), the CPU 11 proceeds to step S502. Here, the CPU 11 makes the output unit of the check machine 21 output a message such as "This ID is incorrect." Alternatively, the CPU 11 may perform processing of making another check machine 21 used by a worker or the terminal device 22 associated, at the error notification address data, with the check machine 21 that made the determination output the information indicating an error.

If the read ID is recorded in the traveler data or baggage data (S504: YES), the CPU 11 reads out the information associated with the ID from the traveler data or baggage data (S505). The CPU 11 compares the read-out information with the latest information in the transportation information storage device 4 through the communication network N1 in order to determine whether or not the information is updated. If the information is updated, the CPU 11 performs error processing and records the error information including the item name of the changed information, the content of information before and after change, the date and time of change as well as the number of changes at the error history data by associating them with the flight specifying information at least including a flight number and departure date in the storage unit 14. The CPU 11 next performs the inspection processing (S506). The content of the inspection processing at step S506 is similar to that described with reference to the flowchart in Fig. 5.

The CPU 11 determines whether or not the current passage point is the correct passage point through which the traveler or baggage can pass on the basis of the route information which is included in the information associated with the ID and which includes the changed information (S507). For example, the CPU 11 determines whether or not the current passage point where the check machine 21 is installed is included in the passage points on the travel route indicated by the latest route information associated to the ID. If the current passage point is not included in the travel route indicated by the latest route information, the CPU 11 determines that the current passage point is not a correct passage point. Furthermore, the CPU 11 may also determine whether or not the sequence of passage specified by the latest route information matches with the sequence of passage calculated from the actual passage time. If the current passage point is not the correct passage point (S507: NO), the CPU 11 performs the processing of notifying that the travel route is wrong (S508). At step S508, the CPU makes the output unit of the check machine 21 output a message such as "The flight is incorrect," "The boarding gate is incorrect," "The baggage claim area is incorrect" or "The route is incorrect." The CPU 11 may also perform processing of outputting by using the output unit of the check machine 21 a message of showing the correct passage point. For example, a message such as "Please go to the gate number XX located at OO" or "Please go back on the pathway and turn right." The CPU 11 may further perform processing of making another check machine 21 or terminal device 22 used by a worker the information indicating the incorrect passage point. Here, the CPU 11 may perform the processing of closing the gate or stopping the conveying device. The CPU 11 next records the error information at the error history data (S509) and ends the processing. Note that the processing performed at steps S507 to S509 may also be performed by the check machine 21 installed at the first passage point.

General travelers do not use airplanes very often and thus do not precisely know about the pathways at an airport. Moreover, there are a large number of pathways at an airport that are constructed in complicated manners. Furthermore, at an airport in a foreign country, the directory is often indicated in foreign languages while workers who give directions usually speak foreign languages, which make it difficult for a traveler to move along a correct pathway at such an airport. It is thus very useful to provide an individual traveler with a correct guidance in accordance with the situation of the traveler. On the basis of the information acquired with respect to a traveler, the check machine 21 makes determination regarding a passage point, and the travel situation detection apparatus 1 gives a notification of the current situation or a guidance for a correct route if the traveler is passing though an incorrect passage point, further facilitating the traveler's traveling. This can shorten the time required for traveler to move at an airport and thus can reduce the delay in the arrival time.

If the current passage point is the correct passage point at step S507 (S507: YES), the CPU 11 specifies passage time at which a traveler or baggage passes through the current pasage point in accordance with the date and time measured by the clock unit 15 (S510). The CPU 11 performs processing of determining whether the passage time at the passage point is earlier, later or around the average in comparison with the past records (S511). More specifically, the CPU 11 reads out from the mean data stored in the storage unit 14 the mean and standard deviation of the passage time associated with the information indicating the current passage point and the flight specifying information associated with the acquired ID of the traveler or baggage among the traveler data or baggage data, and makes determination based on the read-out mean and standard deviation. For example, assuming that the standard deviation is σ, the CPU 11 determines that the passage time is early when it is smaller than (mean-4σ) and is late when it is larger than (mean+4σ). The CPU 11 determines that the passage time corresponds to the average when it is in the range between (mean-4σ) and (mean +4σ). It is noted that, at step S511, the CPU 11 may make a determination by setting (mean-σ) and (mean+σ) as a reference, and also by setting (mean-3σ) and (mean +3σ) as a reference. The CPU 11 may further make a determination by setting (mean-0σ) and (mean+0σ) as a reference. If the passage time is earlier or later compared to the past records (S511: NO), the CPU 11 performs processing of notifying the traveler and worker that the passage time does not correspond to the average (S512). Note that the flight specifying information used for associating information at step S511 is one of the use condition specifying information.

At step S512, the CPU 11 makes the output unit of the check machine 21 output a message such as "You are earlier than normal" or "You are later than normal." Alternatively, the CPU 11 may calculate the difference between the mean and passage time and output the calculated difference by indicating "You are X minutes late." In addition, the CPU 11 may also make the output unit of the check machine 21 output the mean, standard deviation and passage time used for determination. The CPU 11 transmits information related to the result of determination to another check machine 21 used by a worker or the terminal device associated, in the error notification address data, with the check machine 21 that made the determination. In addition to the information output to the output unit of the check machine 21, the information to be transmitted includes other information such as the ID of traveler, the personal information of traveler, the ID of baggage, the personal information of the owner of baggage, the ID and installation place of the check machine 21 that made the determination, the ID and installation place of the check machine 21 at the passage point through which the traveler or baggage last passed, the date and time of determination, as well as the date and time when the traveler or baggage last passed the passage point. The check machine 21 or terminal device 22 that received the information related to the result of determination outputs the received information by using the output unit. It is also possible that the mean and standard deviation of the passage time at which more than one baggage associated with the same flight specifying information are calculated by the travel situation detection apparatus 1, and the mean or standard deviation of the passage time is output by the terminal device 22 for each passage point. In such as case, for example, the mean passage time of the first ten pieces of baggage among one hundred pieces of baggage passing through a passage point is output, and it is compared with the mean and standard deviation of the past passage time output separately. If the mean passage time of the ten pieces of baggage is larger than the past (mean value -σ), it is possible to determine that the conveying work is being late. Such estimation can be obtained, since an experienced worker who engages in the conveying work almost every day roughly understands the amount of baggage passing through a passage point for each flight. Here, it is also possible to output the name of a worker who engages the transport work at the time of observation at each passage point. It is noted that the CPU 11 may also make the check machine 21 or terminal device 22 output information in a similar manner even when the result of determination is "approximately normal." The flight specifying information used for associating information at step S512 is one of the use condition specifying information.

Notification to the traveler on the result of determination for passage time motivates the traveler to consciously increase or decrease the travelling speed. Furthermore, the result of determination for passage time is useful for the traveler who is anxious about the schedule such as the time for transfer at an airport or the time to meet someone at an airport of arrival.

Moreover, notification to the worker about the result of determination for passage time facilitates the worker to direct the traveler who has a risk to be late for the boarding time of a flight. For example, because the position of the check machine 21 that made a determination for the traveler's passage time becomes clear, a worker can easily assume the position of the traveler who has checked in but has not appeared at the boarding gate and can easily find the traveler for guidance. Likewise, the worker can easily direct the traveler who has a risk to be late for transfer of flight. This allows the traveler to minimize a delay in traveling.

Furthermore, the result of determination for the passage time of the baggage shows the progress of the transport work, and if not in average, it serves for the information for leading a worker to try to make it closer to the average. The result of determination for the passage time for baggage is output to the terminal device 22 located at the standby place of a the worker who works for baggage transport in order for the worker to outlook the progress of the conveying work, allowing the worker to take measures for improving the quality of the conveying work in accordance with a situation, such as sending a help when the transport is delayed. For example, in the case where the conveying work of baggage at a passage point is started but the indication "earlier" compared to the mean -σ of the past passage time is not output, the worker can understand that the conveying work started late. When, on the other hand, the indication "earlier" compared to the mean -4σ is output, the worker may recognize that the conveying work started early. When "later" compared to the mean +4σ is output, the worker can understand that the delay in the conveying work could not be recovered to the last. Moreover, the information related to the progress of the conveying work of baggage makes the working situation of a worker be transparent for viewers. Workers are obliged to repeat a predetermined standard work, so it makes it difficult for them to perform an irregular act of, for example, improper handling which leads to damage to baggage or is stealing baggage and can improve the quality of conveying work. This can also have an effect of reducing a delay in traveling of a traveler or baggage caused by such irregular work. The determination for the passage time and the output of the determination result to the terminal device 22 may be performed at other passage points such as a check-in counter, security inspection, immigration, emigration or customs inspection. The improvement in the quality of work may similarly be expected by the workers at these passage points as well.

The CPU 11 subsequently records error information including that the passage time does not correspond to the average at the error history data (S513). Note that the processing at steps S511 to S513 may also be performed by the check machine 21 at the first passage point. When step S513 is finished or when the passage time corresponds to the average compared the past records at step S511 (S511: YES), the CPU 11 records the information including the ID of the traveler or baggage, the ID of the above check machine 21, the latest route information, the name of the determination item which has no error processing and the result before and after determination as well as passage time at the traveler data or baggage data so as to store them in the storage unit 14 in association with each other (S514). Here, the check machine 21 records a part or all of the acquired information in the ticket 31 or baggage claim tag 32 as needed. The CPU 11 then makes the check machine 21 open the gate or maintains the baggage conveying device in an operating state to open the pathway for the traveler or baggage (S515). This allows the traveler to pass through the passage point. At step S515, the CPU 11 may make the output unit of the check machine 21 output the information for guiding a pathway based on the information associated with the traveler's ID. For example, the output unit of the check machine 21 outputs the number of the check machine 21 located at the passage point at which the traveler is supposed to pass through next, the location name of the next passage point, or an instruction or the like of traveling direction such as go straight, turn left, or turn right. Furthermore, when several gates leading to multiple pathways are provided at the check machine 21, the CPU 11 may perform processing of opening only the gate leading to the pathway the traveler should take.

Travel situation detection apparatus 1 and the check machine 21 thus end the processing of checking the passage of the traveler at each of the second and subsequent passage points. The processing at steps S510 to S515 are executed at each of the second and subsequent passage points every time the traveler or baggage passes through. It is noted that the travel situation detection apparatus 1 may have a form of executing the inspection processing at step S506 only at a part of the passage points.

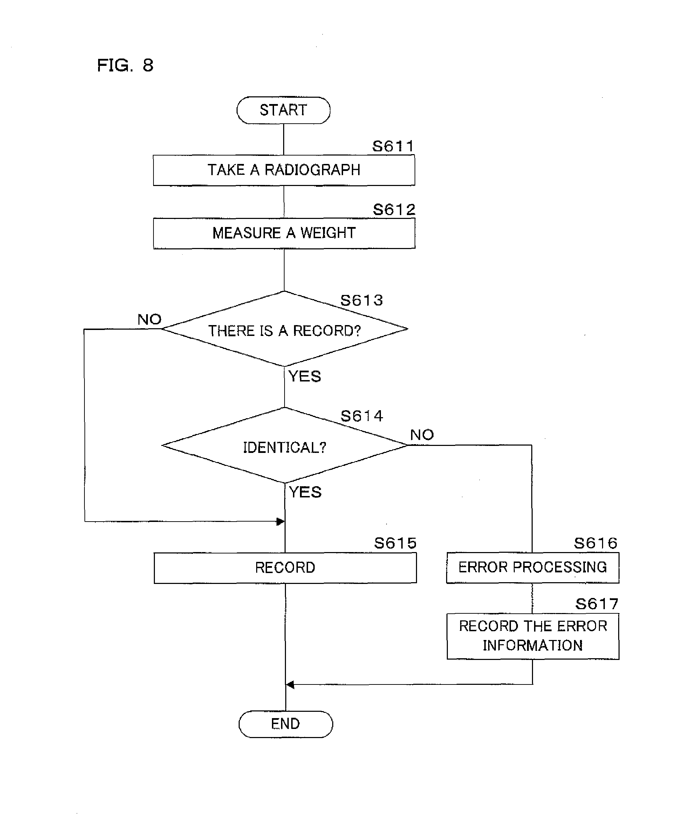

Moreover, the travel situation detection apparatus 1 performs processing of inspecting baggage in at least one passage point in a place of departure and a place of arrival among multiple passage points where baggage passes through. Fig. 8 is a flowchart illustrating a procedure of inspection processing for baggage. The check machine 21 installed at the passage point where the processing of inspecting baggage is performed includes the function of taking a radiograph of baggage by using an X-ray and the function of measuring the weight of baggage. That is, the check machine 21 also serves as a measurement means. Note that the travel situation detection system may have a form of including a measurement means separately from the check machine 21. The CPU 11 makes the check machine 21 take a radiograph of baggage arrived at a passage point by using an X-ray (S611) and measure the weight of the baggage (S612). The CPU 11 next determines whether or not the information indicating the radiograph and weight is recorded in association with the ID of the baggage in the baggage data stored at the storage unit 14 (S613). If the information indicating the radiograph and weight is recorded (S613: YES), the CPU 11 determines whether or not the radiograph and weight indicated by the recorded information matches with the taken radiograph and measured weight (S614). At step S614, the CPU 11 determines that the radiographs match when a predetermined percentage, e.g. 80%, of the areas of the radiographs match with each other. Moreover, the CPU 11 determines that the weights match when a difference between the measured weights is in the range of a predetermined allowable range, e.g. 20% of the recorded weight. In the case where multiple pieces of information indicating the radiograph and weight associated with the ID of baggage stored by the storage unit 14 is recorded, the CPU 11 compares the above-described information with the oldest information in the record and determines that they do not match with each other when the result of comparison is outside the allowable range.

If there is no record of the information indicating a radiograph and weight at step S613 (S613: NO), or if the radiographs and weights match respectively at step S614 (S614: YES), the CPU 11 records information indicating the taken radiograph and measured weight in the baggage data (S615). At step S615, the CPU 11 records the information indicating a radiograph and weight at the baggage data stored in the storage unit 14 by associating with the ID of the baggage and the ID of the check machine 21 which performed the photograph taking and weight measuring. After step S615 is completed, the CPU 11 ends the processing.

If the radiographs or weights do not match at step S614 (S614: NO), the CPU 11 performs error processing (S616). In the error processing at step S616, the CPU 11 transmits information related to the result of determination to the terminal device 22 associated, in the error notification address data, with the check machine 21 that made the determination or another check machine 21 used by a worker. The information to be transmitted includes, in addition to the information indicating that the radiographs or weights do not match, the information such as the ID of baggage, the personal information of the owner of baggage, and the ID and installation place of the check machine 21 that made the determination. The terminal device 22 which received the information related to the determination result outputs by using the output unit the information related to the result of determination including an error message indicating, for example, that "the content of baggage is changed." Moreover, the CPU 11 stops the processing of conveying baggage or directs the baggage to a conveyance pathway dedicated to inspection. The worker notified of the information performs operations of, for example, inspection such as opening the baggage and checking the content, investigating the cause of error, recovering, and attaching a note to the baggage addressed to the owner of the baggage. The worker thereafter operates the check machine 21 to input the information indicating that the inspection is completed. The CPU 11 resumes the conveyance of baggage or returns the baggage to its original conveying pathway. The CPU 11 then records the error information in the error history data (S617) and ends the processing.

In addition to the processing performed at steps S501 to S515, the CPU 11 executes the processing of steps S611 to S617 described above. Note that the travel situation detection apparatus 1 may execute only one of the processing of taking a radiograph or measuring a weight. The travel situation detection apparatus 1 may also execute the processing of steps S611 to S617 not only at one passage point but at more passage points in each of places of departure and arrival. Furthermore, the travel situation detection apparatus 1 may execute the processing of steps S611 to S617 at the time of the inspection processing.

Moreover, the travel situation detection apparatus 1 uses the check machine 21 provided with a help button to perform necessary guidance for a traveler when the traveler presses the help button. When the help button of a check machine 21 is pressed, the CPU 11 transmits information including the ID or installation place of the check machine 21, the ID and personal information of the traveler, information indicating that the guidance is needed, as well as the date and time when the help button is pressed to the terminal device 22 associated, at the error notification address data with, the check machine 21 on which the help button is pressed. Here, the CPU 11 records error information at the error history data. The worker who is notified by the terminal device 22 that guidance is needed is deployed to the check machine 21 on which the help button is pressed so that he/she can guide the traveler.

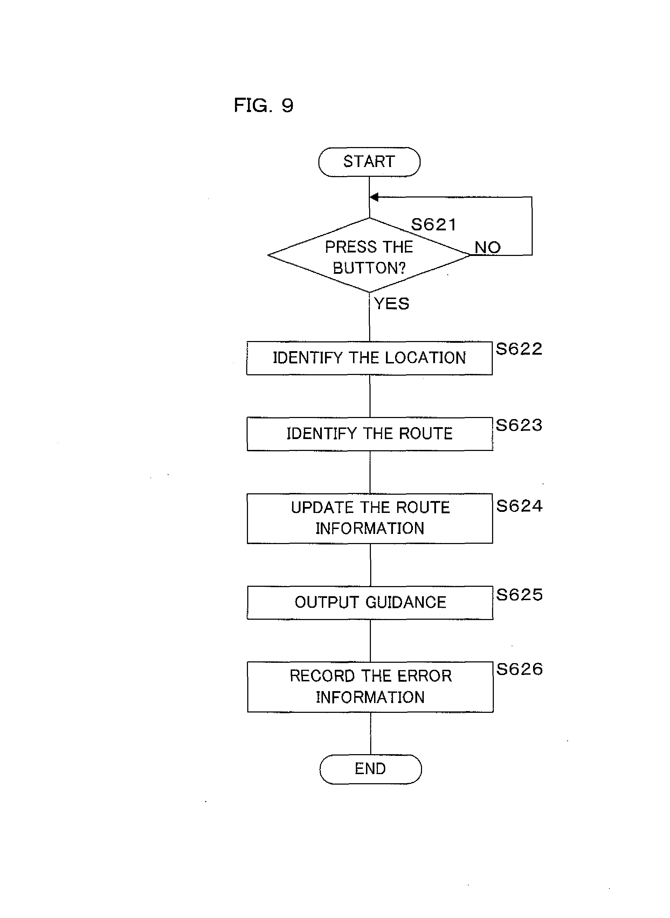

Furthermore, the travel situation detection apparatus 1 may execute processing of automatic guidance by using the check machine 21 when the help button on the check machine 21 is pressed. For example, the check machine 21 may be provided with a button for the direction to a rest room and the CPU 11 may perform processing of giving guidance of the rest room. Fig. 9 is a flowchart illustrating a procedure of giving guidance of a rest room. The check machine 21 performs the processing of waiting for traveler's push of the button for guidance of a rest room (S621). If the button is not pressed (S621: NO), the check machine 21 continues waiting. If the button for guidance of the rest room is pressed (S621: YES), the CPU 11 reads out from the transportation information storage device 4 the information related to airport facilities through the communication network N1 and identifies the location of the closest rest room (S622). The CPU 11 then identifies the route to/from the closest restroom from/to the current position (S623). The CPU 11 next adds the information indicating the identified route to the rest room so as to update the route information for the traveler (S624). The CPU 11 subsequently makes the output unit of the check machine 21 output the travel route to the rest room (S625), records the error information indicating that the guidance has been given in the error history data (S626), and ends the processing. This allows the traveler to use the rest room without losing his/her way and to move without wasting time. Therefore, a delay in traveler's traveling can be minimized. When the route information is changed, the CPU 11 transmits the change information indicating the content of change to the transportation information storage device 4 by associating it with the traveler's personal information such as a reservation number. The transportation information storage device 4 updates information stored in association with the same personal information with the received personal information.

The traveler sometimes receives a secondary service associated with the use of an airplane, such as baggage pickup or meeting with another person. For example, at an airport of arrival, a traveler receives a service that checks an immigration card given to a traveler when entering a foreign country by an international airline and attaches a part of it to the passport, or that hands over goods sold to the traveler on an airplane or an airport of departure. Moreover, at an airport of departure in an international airline, he/she gets a service that collects the part of the immigration card attached to the passport or that hands over goods sold in the airport of departure or on an airplane when entering into the country. In addition to the processing of steps S501 to S515, the travel situation detection apparatus 1 executes the processing for these services to be rapidly and accurately provided at any of the passage points in an airport.

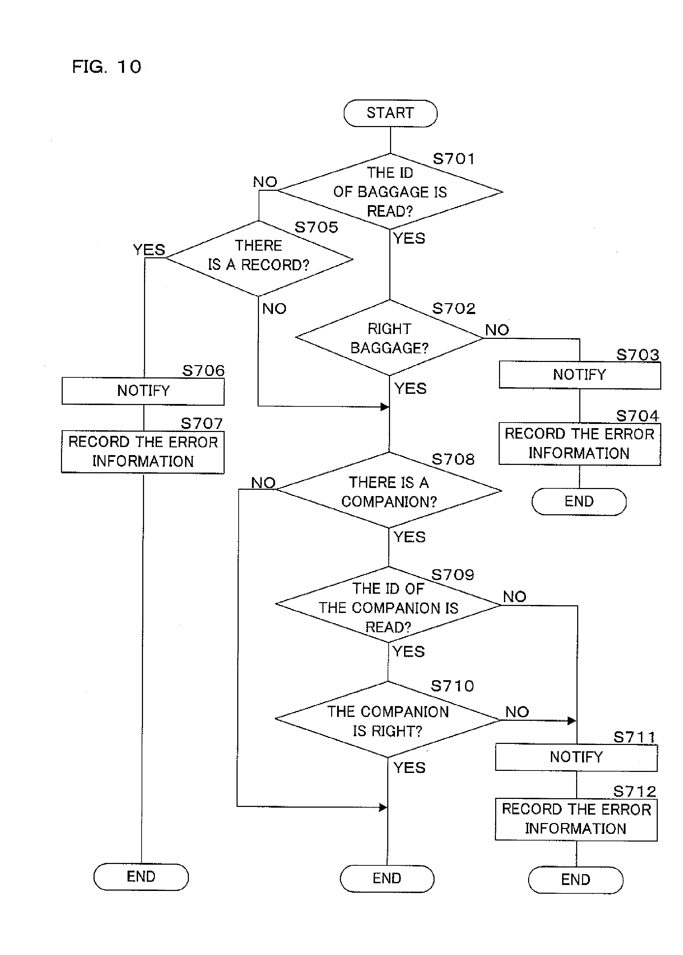

Fig. 10 is a flowchart illustrating a procedure of additional processing executed by the travel situation detection apparatus 1 at an arrival place. For example, at the exit of baggage claim, a worker or the check machine 21 requests the traveler to submit the ID of baggage. By the check machine 21 performing the processing of reading the ID recorded in the baggage claim tag 32, the CPU 11 determines whether or not the ID of baggage is read (S701). If the check machine 21 has read the ID of baggage (S701: YES), the CPU 11 determines whether or not the baggage correctly belongs to the traveler (S702). At step S702, the CPU 11 determines whether or not the ID of the read baggage is associated with the traveler's ID recorded at the traveler data stored in the storage unit 14. If the ID of baggage is associated with the traveler's ID, the baggage belongs to the traveler, whereas the baggage does not belong to the traveler when the traveler's ID is not associated with the ID of the baggage.

When the baggage does not belong to the traveler (S702: YES), the CPU 11 performs the processing of notifying the traveler and worker that a mistake in baggage pickup occurred (S703). At step S703, the CPU 11 makes the output unit of the check machine 21 output a message such as "This is a wrong baggage." Moreover, the CPU 11 transmits the information related to the result of determination to another check machine 21 used by a worker or the terminal device 22 associated, at the error notification address data, with the check machine 21 that made the determination. The information to be transmitted includes, in addition to the information indicating that a mistake in baggage pickup occurred, information such as the ID of traveler, the personal information of the traveler, the ID of baggage, the personal information of the owner of the baggage, and the ID and installation location of the check machine 21 that made the determination. The check machine 21 or the terminal device 22 that received the information related to the result of determination output the received information by using the output unit. The CPU 11 records the error information including the information indicating the occurrence of mistake in baggage pickup at the error history data (S704), and ends the additional processing. Here, it is desirable that the CPU 11 performs the processing of, for example, closing the gate of the check machine 21 to block the pathway of the traveler.

If the ID of baggage is not read at step S701 (S701: NO), the CPU 11 determines whether or not the ID of baggage associated with the traveler's ID read at the check machine 21 is recorded at the traveler data stored in the storage unit 14 (S705). If the ID of baggage is recorded (S705: YES), the processing of notifying the traveler and worker that a failure in baggage pickup occurred (S706). At step S706, the CPU 11 makes the output unit of the check machine 21 output a message such as "You forget to pick up your baggage." Moreover, the CPU 11 transmits the information related to the result of determination to another check machine 21 used by a worker or the terminal device 22 associated, at the error notification address data, with the check machine 21 that made the determination. The information to be transmitted includes, in addition to the information indicating that a failure in baggage pickup occurred, information such as the ID of the traveler, the personal information of the traveler, the ID of the baggage to be picked up, the ID and the installation location of the check machine 21 that made the determination. The check machine 21 or terminal device 22 that received the information related to the result of determination outputs the received information by using the output unit. The CPU 11 records at the error history data the error information including the infomration indicating that a failure in baggage pickup occurred (S707), and ends the additional processing. Here, the CPU 11 preferably blocks the pathway for the traveler by the processing of, for example, closing the gate of the check machine 21.

If the ID of baggage is not recorded at step S705 (S705: NO), or if the baggage correctly belongs to the traveler at step S702 (S702: YES), the CPU 11 determines whether or not the traveler has a travel companion (S708). At step S708, the CPU 11 determines whether or not the ID of the traveler recorded at the traveler data stored in the storage unit 14 is associated with the information indicating that the traveler has a companion. The traveler has a companion when the information indicating that the traveler has a companion is associated with the traveler's ID, whereas the traveler does not have a companion when the information indicating that the traveler has a companion is not associated with the traveler's ID. If the traveler has a companion (S708: YES), the worker or check machine 21 requests the ID of the companion, and the CPU 11 determines whether or not the ID has been read by the check machine 21 performing the processing of reading the ID recorded in the ticket 31 of the companion (S709). If the check machine 21 reads the ID of the companion (S709: YES), the CPU 11 determines whether or not the companion is the right person (S710). At step S710, the CPU 11 determines whether or not the read ID of the companion is associated with the ID of the traveler recorded at the traveler data stored in the storage unit 14. If the ID of the companion is associated with the ID of the traveler, the companion is the right person. If, on the other hand, the ID of the companion is not associated with the ID of the traveler, the companion is not the right person.

If the ID of the companion is not read as step S709 (S709: NO), or if the companion is not the right person at step S710 (S710: NO), the CPU 11 performs the processing of notifying the traveler and worker that the companion is not present (S711). At step S711, the CPU 11 makes the output unit of the check machine 21 output a message such as "the companion is not present." Furthermore, the CPU 11 transmits the information related to the result of determination to another check machine 21 used by a worker or to the terminal device 22 associated, at the error notification address data, with the check machine 21 that made the determination. The information to be transmitted includes, in addition to the information indicating that the companion is not present, information such as the ID of the traveler, the personal information of the traveler, the ID of the companion, the personal information of the companion, as well as the ID and installation location of the check machine 21 that made the determination. The check machine 21 or terminal device 22 that received the information related to the result of determination outputs the received information by using the output unit. The CPU 11 records at the error history data the error information including the information indicating that the companion is not present (S712) and ends the additional processing. Here, the CPU 11 preferably blocks the pathway of the traveler by the processing of, for example, closing the gate of the check machine 21. If there is no companion (S708: NO) or the companion is the right person (S710: YES), the CPU 11 ends the additional processing.

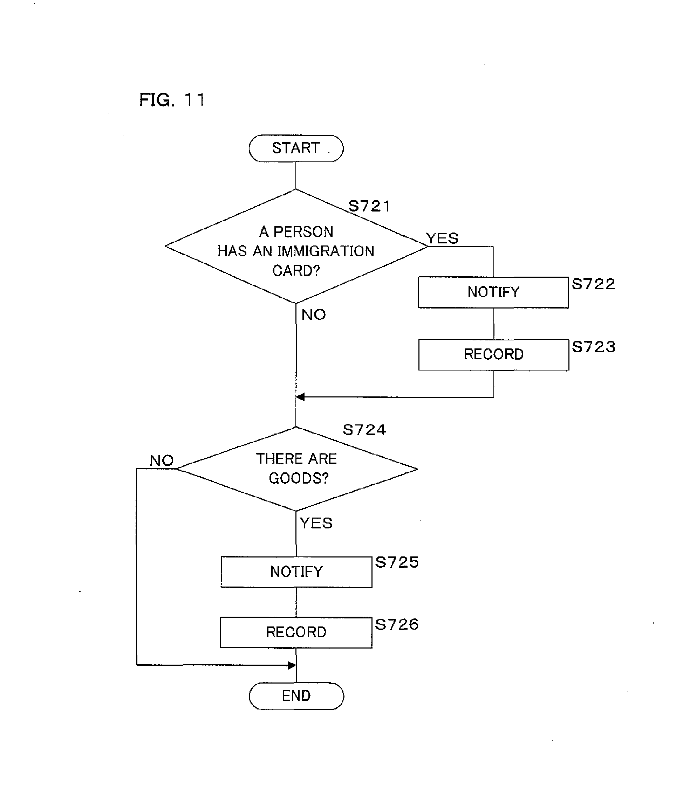

Fig. 11 is a flowchart illustrating a procedure of additional processing executed by the travel situation detection apparatus 1 at a departure place. When a traveler passes through a specified passage point such as a departure gate for an international airline at an airport, the CPU 11 determines whether or not the traveler is a person provided with an immigration card (S721). A foreign traveler is provided with a part of the immigration card when entering the country. The travel situation detection apparatus 1 records in advance the number of the provided immigration card at the traveler data in association with the ID of the traveler who is provided with the immigration card. For example, the number of the immigration card given to the traveler is recorded in a database (not shown) by associating it with the information such as the traveler's personal information. The travel situation detection apparatus 1 reads out data from the database and records the number of the immigration card at the traveler data by associating it with the ID of the traveler associated with the same information as the traveler's information recorded in the database. At step S721, the CPU 11 determines whether or not the number of the immigration card is associated with the ID of the traveler recorded at the traveler data stored in the storage unit 14. The traveler is provided with the immigration card when the number of the immigration card is associated with the ID of the traveler, whereas the traveler is not provided with the immigration card when the number of the immigration card is not associated with the ID of the traveler. It is noted that information indicating whether or not the immigration card is given to the traveler may be recorded in the traveler data.

If the traveler is provided with the immigration card (S721: YES), the CPU 11 performs the processing of notifying a worker that the traveler is provided with the immigration card (S722). At step S722, the CPU 11 makes the check machine 21 used by the worker and the terminal device 22 associated, at the error notification address data, with the check machine 22 that made the determination output the information indicating the result of determination. Here, the CPU 11 preferably blocks the pathway for the traveler by the processing of, for example, closing the gate of the check machine 21. The worker who received the notification collects the immigration card from the traveler and operates the check machine 21 or terminal device 22 to therein input information that the immigration card has been collected. The CPU 11 records the information indicating that the immigration card has been collected from the traveler at the traveler data (S723). Here, the CPU 11 opens the pathway for the traveler. The CPU 11 may also record the error information including information indicating that the immigration card has been collected at the error history data.
It is also possible, as another mode, that the inspection information storage device 5 acquires information from the database concerning the traveler provided with a part of the immigration card. In such a case, the CPU 11 performs processing of detecting a traveler who is provided with a part of the immigration card in the inspection processing at step S506.

If step S723 is completed, or if the traveler is not the person who is provided with an immigration card at step S721 (S721: NO), the CPU 11 determines whether or not there are goods to be handed over to the traveler (S724). At step S724, the CPU 11 determines, for example, whether or not goods information including the read ID of the traveler is recorded at the product data stored in the storage unit 14. If the goods information including the ID of the traveler is recorded at the product data, there are goods to be handed over to the traveler. If, on the other hand, the goods information including the ID of the traveler is not recorded at the product data, there are no goods. If there are goods to be handed over to the traveler (S724: YES), the CPU 11 performs processing of notifying the traveler and worker that there are goods to be handed over to the traveler (S725). At step S725, the CPU 11 makes the output unit of the check machine 21 output a message such as "There are goods to be handed over to you." Here, the CPU 11 preferably blocks the pathway of the traveler by the processing of, for example, closing the gate of the check machine 21. Moreover, the CPU 11 transmits the information related to the determination result to another check machine 21 used by a worker or the terminal device 22 associated, at the error notification address data, with the check machine 21 that made the determination. In addition to the information indicating that there are goods, the information to be transmitted includes the ID of the traveler, the personal information of the traveler, the ID of the goods, the name of the goods, as well as the ID and installation location of the check machine 21 that made the determination. The check machine 21 or the terminal device 22 that received the information related to the result of determination output the received information by using the output unit. The worker who received the notification hands over the goods to the traveler and operates the check machine 21 or terminal device 22 to input therein the fact that the goods have been handed over. The CPU 11 records the information indicating that the goods have been handed over to the traveler at the product data (S726). Here, the CPU 11 opens the pathway for the traveler. It is noted that, at step S726, the CPU 11 may record the ID of the goods at the baggage data in the storage unit 14 by associating it with the personal information, the latest route information and the like of the traveler. Furthermore, the CPU 11 records at the error history data the error information including the information indicating that the goods have been handed over.

After completing step S726 or if there is no goods to be handed over to the traveler at step S724 (S724: NO), the CPU 11 ends the additional processing. The CPU 11 executes the processing at the steps S701 to S712 or the processing at steps S721 to S726 in addition to the processing at steps S501 to S515. Note that the processing at steps S701 to S707 and the processing at steps S708 to S712 may be executed at different passage points, not the same passage point. Likewise, the processing at steps S721 to S723 and the processing at steps S724 to S726 may be executed at different passage points.

The processing of steps S701 to S707 can immediately correct any traveler's mistake in baggage pickup, and can also avoid baggage theft. Also, a failure in baggage pickup can immediately be detected. This can shorten the time required for picking up baggage again and can minimize a delay in traveling of the traveler. The processing at steps S701 to S707 is not only performed at one point of an arrival place but may be executed in more than one passage points including the passage point of a departure place. Similar processing may also be performed for carry-on baggage held by the traveler. When the processing of steps S701 to S707 are executed at multiple passage points, baggage can be found at a passage point even if baggage theft occur in an area located among passage points. Moreover, even in the case where a traveler loses baggage, a place where the baggage is lost is limited to an area between passage points, which facilitates finding of a lost object. This can prevent the traveler to search for a lost object without a clue, thereby minimizing a delay in traveling of the traveler.

By the processing of steps S708 to S712, a traveler is to pass through a passage point certainly with a travel companion. A traveler with a companion who is likely to be separated, such as a traveler in a tour group with a child who frequently tries to go away from his/her guardian to stop by stores on the pathway, may be able to shorten the traveling time. Because the traveler who is not with a companion is detected at a passage point, a companion who has been separated from the traveler is easily found. This eliminates the need for the traveler to search for his/her companion without a clue, and thus minimizes a delay in traveling of the traveler. Note that the processing at steps S708 to S712 is not only performed at one point in an arrival place but also multiple passage points including a passage point in a departure place. Even if a companion becomes lost, the location of the companion is limited to an area located between passage points. This can facilitate to find the companion and can minimize a delay in traveling time.

The processing of steps S721 to S723 enables an operator to reliably and quickly collect immigration cards from travelers. By the processing of steps S724 to S726, it is also possible to reliably and quickly hand over sold goods to travelers. This cuts a process of finding out a traveler from whom an immigration card is to be collected or who is to be given goods, thereby minimizing a delay in traveling of a traveler due to collection of immigration card or handover of goods. If, for example, a traveler who is supposed to receive goods at a departure gate of an international airline cannot be found and thus an in-flight call is made to find and hand over the goods to the traveler, it takes time to hand over the goods, and the flight is delayed. The present invention is able to prevent such delay. Furthermore, the handed-over goods go through a check concerning the owner at the check machine 21 located in a subsequent pathway, which allows the goods to easily be found even if it is lost and prevents a delay in travel time caused by the received goods.

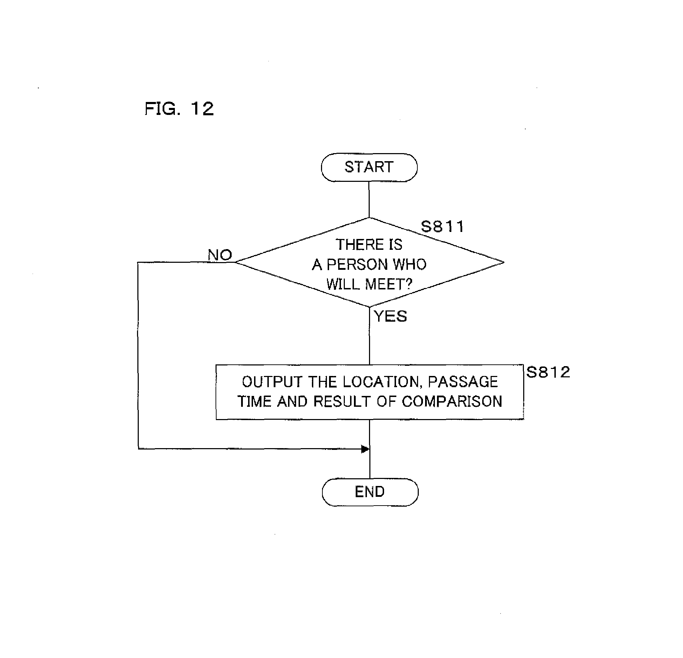

Moreover, the travel situation detection apparatus 1 performs processing of guiding a traveler for meeting with another person in an airport. A specific terminal device 22 having a display as an output unit is installed in a specific place such as a waiting room in which a waiting person stays at the airport. The waiting person can see the information output on the terminal device 22. Fig. 12 is a flowchart illustrating a procedure of guiding for meeting another person. After the processing with each check machine 21 is completed, the CPU 11 determines whether or not a traveler who passed through a passage point plans to meet another person (S811). At step S811, the CPU 11 determines whether or not information which is about another person planning to meet the traveler and which is associated with the ID of the traveler read by the check machine 21 is recorded in the traveler data stored in the storage unit 14. If the traveler plans to meet another person (S811: YES), the CPU 11 makes the output unit of the specified terminal device 22 output traveler's personal information, a position of a passage point through which the traveler passes through, passage time, a mean value and a standard deviation of the passage time read out at step S511, and a determined result of comparison between the passage time and the mean value (S812). After step S812 is completed or the traveler does not plan to meet another person at step S811 (S811: NO), the CPU 11 terminates the processing. The CPU 11 executes the processing at steps S811 to S812 every time the processing by each check machine 21 in the airport is completed.

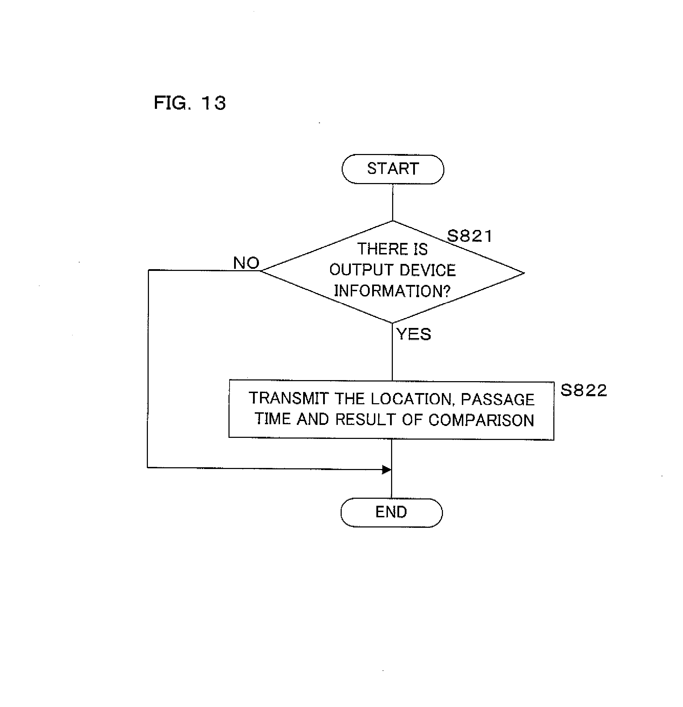

Furthermore, the travel situation detection apparatus 1 may also perform processing of notifying of a travel situation the terminal device 22 or mobile terminal device 23 designated in advance, such as the mobile terminal device 23 held by a person the traveler plans to meet, the terminal device 22 or mobile terminal device 23 used by businesses such as a store, hotel or the like. Here, at the traveler data stored in the storage unit 14, output device information which is associated with the traveler's ID and which indicates the terminal device 22 or mobile terminal device 23 which is to be notified of the travel situation. Fig. 13 is a flowchart illustrating a procedure of processing in which the travel situation detection apparatus 1 notifies the terminal device 22 or mobile terminal device 23 of a travel situation. After completing the processing by using each check machine 21, the CPU 11 determines whether or not the output device information indicating the terminal device 22 or mobile terminal device 23 which is to be notified of the travel situation is recorded at the traveler data stored in the storage unit 14 in association with the traveler's ID read by the check machine 21 (S821). If the output device information is recorded (S821: YES), the CPU 11 transmits traveler's personal information, a position of the passage point through which the traveler passes, passage time, a mean value and a standard deviation of the passage time read out at step S511, and a determined result of comparison between the passage time and mean value to the terminal device 22 or mobile terminal device 23 indicated by the output device information (S822). The terminal device 22 or mobile terminal device 23 to which the information is transmitted outputs the received information by using the output unit. After completing step S822 or if the output device information is not recorded at step S821 (S821: NO), the CPU 11 terminates the processing. The CPU 11 executes the processing at steps S821 to S822 every time the processing by each check machine 21 is completed at an airport of an arrival place. It is noted that the travel situation detection apparatus 1 may execute the processing both at steps S811 to S812 and at steps S821 to S822.

It is also possible that the CPU 11 transmits information obtained only from the recorded check machine 21 to the terminal device 22 or mobile terminal device 23 by beforehand recording the information related to the ID of the check machine 21 which acquires the information to be transmitted to the terminal device 22 or mobile terminal device 23 in association with the traveler's ID at the traveler data in the storage unit 14. Furthermore, the period and timing for transmitting information to the terminal device 22 or mobile terminal device 22 may be recorded in advance in association with the traveler's ID, and the CPU 11 may transmit the information to the terminal device 22 or mobile terminal device 23 in accordance with the recorded period and timing. Here, the CPU 11 may also transmit information to the terminal device 22 or mobile terminal device 23 every day in a period from immediately after completion of the reservation of an air ticket to the end of travel.

To the terminal device 22 or mobile terminal device 23, in addition to the above, flight specifying information, route information, approximate current position of the traveler and a distance to a specific place may also be output. Moreover, when the traveler has not arrived at a place of arrival, information indicating no arrival may also be output. Furthermore, information on an error occurred at each passage point may also be output. A waiting person checks the information output to the output unit of the terminal device 22 or mobile terminal device 22 to recognize the situation of the traveler including the occurrence of an error, so that he/she can accurately estimate the time required until the traveler appears. When, for example, the error information which is obtained from the check machine 21 located before immigration at an arrival airport includes information indicating that the traveler used a rest room, it is considered that the traveler unlikely uses a rest room again in a pathway to an arrival lobby where the person is waiting. The waiting person who obtained the information can estimate more accurate waiting time based on the passage time information sent from the check machine 21 in the subsequent pathway. Compared to the case where the person waiting with no information on the situation of the traveler, the waiting situation is improved because, for example, burden on the waiting person is reduced, the waiting person certainly meets the traveler and the waiting person can be prepared immediately before meeting the traveler.

In the case where the terminal device 22 or mobile terminal device 23 used by a business is notified of the traveler's situation, a business such as a souvenir store, hotel, taxi, restaurant or the like is notified of the travel situation of the traveler. The business can thus provide a service according to the travel situation of the traveler. This enables the traveler to, for example, immediately start eating dishes prepared at suitable time at a restaurant in an arrival airport, for which the traveler made a reservation in advance. As such, the travel situation detection system in the present invention can not only save the traveling time of a traveler or baggage but also improve the quality of services during traveling or at a destination. Moreover, if the CPU 11 performs processing of providing baggage and person waiting for baggage with guidance for a rendezvous in a similar manner, a carrier who handles air transported luggage can utilize the travel situation detection system. For example, the carrier can estimate the progress of operations such as the one at customs inspection performed for baggage at an arrival airport based on the information from the check machine 21, prepare an efficient operations schedule and then receive baggage.

In addition, the traveler's personal information notified to the terminal device 22 or mobile terminal device 23 may be a part of personal information. For example, an initial, a nickname or a serial number assigned by the travel situation detection apparatus 1 may be used. In association with the traveler's ID, personal information for notification such as a nickname is recorded at the traveler data in advance, while the CPU 11 transmits the personal information for notification associated with the traveler's ID to the terminal device 22 or mobile terminal device 23. The personal information for notification may be recorded in association with the information for distinguishing individual terminal devices 22 or mobile terminal devices 23 from each other. Here, the CPU 11 transmits personal information for notification which is different for each of the addressed terminal device 22 or mobile terminal device 23. In this form, it is also possible to register, for example, an e-mail address of a traveler for the terminal device 22 at a store in a departure airport, and an initial of a traveler for the terminal device 22 in a waiting room in an arrival airport as personal information for notification. Here, since an initial of a traveler is output together with other information to the terminal device 22 in the waiting room checked by a large number of unspecified waiting people, it is not necessary to worry about misuse of personal information. Meanwhile, an e-mail address of a traveler is output together with other information to the terminal device 22 or mobile terminal device 23 used in a business, which allows a store to conduct sales promotion by, for example, sending an e-mail to a traveler for advertisement. For example, the terminal device 22 stores data for advertisement and sends an e-mail of advertisement to an e-mail address included in the received information.

The information on the terminal device 22 or mobile terminal device 23 to be notified of a travel situation, personal information for notification on a traveler, information on the check machine 21 acquiring a travel situation which is to be notified, and information related to a period or timing when the notification of a travel situation is issued are set in advance for each traveler. A traveler sets to transmit the information related to his/her travel situation to the terminal device 22 or mobile terminal device 23 used by a business in which the traveler is interested. This allows a store, which received the information related to his/her travel situation from the traveler through its terminal device 22 or mobile terminal device 23, to conduct efficient sales promotion. Furthermore, if the traveler sets the e-mail address of his/her mobile phone as personal information for notification, the traveler can receive an e-mail for advertisement from a store through his/her mobile phone, find goods of interest in the advertisement and acquire the knowledge of the goods in advance. When the traveler arrives at the store, efficient shopping is possible. The traveler can purchase goods briefly or can also do a satisfied shopping after asking a clerk questions by utilizing the pre-acquired knowledge. This enables a store to conduct a sales promotion beforehand for the traveler who is interested in the store and is planning to pass by the store. As such, the travel situation detection system shortens a travel time of a traveler and improves a quality of a service the traveler gets during travel and at a destination.

It is noted that the traveler precedently learns the information related to a business to be notified of his/her travel situation and that when making the reservation for a flight, he/she preferably sets the information of the terminal device 22 or mobile terminal device 23 to be notified of his/her travel situation. For example, information on the business including a position of a store is stored in advance in a database (not shown) for allowing a traveler to view the information when making a reservation for a flight. More specifically, when a traveler selects a flight at the time of reservation, information related to a business having a store on a traveling pathway to a gate where the selected flight departs from or arrives at is output. The traveler preferably uses the information to register information on the terminal device 22 or mobile terminal device 23 of a business of interest. As another possible method, a business may independently place an advertisement on a website to let the public know the existence of the store. The traveler searches for a business of a store located in an airport he/she plans to use, and sets the information on the terminal device 22 or mobile terminal device 23 of a business of interest.

### Embodiment 2

In Embodiment 2, the travel situation detection system detects a travel situation of a traveler or baggage by using a passage period elapsed while a traveler or baggage passes through two passage points. The configuration of the travel situation detection system is similar to that in Embodiment 1. In the present embodiment, the CPU 11 reads out, at step S11, an ID of the traveler of baggage when reading out passage time in addition to the flight specifying information associated with the passage time. The CPU 11 calculates, at step S12, a passage period elapsed while a traveler or baggage passes through two passage points by obtaining the difference between the two pieces of passage time at the two passage points based on a pieces of passage time at each passage point associated with the same flight specifying information and the ID of the same traveler or baggage. The CPU 11 then aggregates the calculated passage periods for each of the sets of two passage points and calculates a mean value and a standard deviation of passage periods. At step S13, the CPU 11 records at mean value data the mean value and standard deviation of the calculated passage periods in association with the information indicating two passage points such as IDs for two check machines 21 and the flight specifying information. Alternatively, the CPU 11 may record the calculated mean value and standard deviation in association with the information indicating one of the two passage points and flight specifying information.

Moreover, the CPU 11, at step S510, specifies passage time while reading out passage time at which a traveler or baggage passed through a specified another passage point immediately before the current passage point from the traveler data or baggage data, and calculates the difference between the two pieces of passage time to obtain a passage period from another passage point to the current passage point. At step S511, the CPU 11 reads out a mean value and a standard deviation of passage periods associated with the information indicating two passage points or information indicating one of the two passage points and with the flight specifying information associated with the ID of the traveler or baggage, and determines if the calculated passage period is shorter, longer or around the average based on the mean value and standard deviation. At step S512, the CPU issues a notification as appropriate. It is not necessary to make a determination for passage periods for all the combinations of two passage points. The CPU 11 may, for example, make a determination for a passage period between a specific passage time point serving as a base and each of the other passage points. Moreover, the CPU 11 may use information which is recorded at the traveler data in advance and which is about the check machine 21 acquiring a travel situation of which is to be notified to a specific terminal device 22 or mobile terminal device 23 in order to determine a passage period related to the check machine 21 for acquiring the travel situation of which is to be notified. Moreover, the CPU 11 may conduct determination both for passage time and a passage period. Also in the present embodiment, as in Embodiment 1, the travel situation detection system can shorten the travel time of a traveler and also improve the quality of a service a traveler gets during travel or at a destination.

As described above, the travel situation detection system according to Embodiment 1 or 2 specifies passage time when a traveler or baggage passes through a passage point on a travel pathway provided at an airport, compares the passage time or a passage period elapsed between two passage points with a mean value, and notifies the traveler or worker of the result of comparison. If the passage time or passage period is later or longer than the mean value, the traveler becomes aware of the delay in traveling and thus can move more quickly. In addition, a worker who guides the traveler recognizes the delay in traveling and thus can lead the traveler to be in hurry. Moreover, a worker who conveys baggage understands the delay in the conveying work and can more quickly do the conveying work for baggage. As a result, dispersion in the passage periods is reduced, a delay for a traveler or baggage traveling in an airport is minimized, and an occurrence of a trouble caused by the delay in traveling is also shrunk. Furthermore, the travel situation detection system may also notify another person, such as a person who is planning to meet a traveler, of a travel situation, i.e., the position, passage time and the like for the passage point through which the traveler or baggage passes. When the person planning to meet the traveler is notified of the travel situation, the person can learn the travel situation of the traveler, which facilitates the waiting person to imagine the arrival time and the state of arrival, alleviates the burden on the waiting person and thereby improves the situation in waiting. Furthermore, when a store is notified of a travel situation, the store can conduct a sales promotion beforehand for a traveler who is interested in the store and is planning to pass by the store, making the traveler to shop efficiently.

Moreover, the travel situation detection apparatus 1 precedently stores therein inspection information related to a suspicious person or baggage that is a subject of thorough inspection and if the information on a traveler or baggage passing through a passage point partly matches with the inspection information, blocks the passage of the traveler or baggage. The traveler or baggage that is blocked its passage is carefully inspected by a worker. As the inspection information is externally acquired as needed, inspection is conducted based on the latest inspection information to ensure the security of a transportation means. The thorough inspection is conducted for only a part of travelers or baggage, while the majority of the travelers or baggage does not receive an inspection or receives simple inspection to pass a passage point, so as to prevent a delay in traveling of the majority of travelers or baggage that is unnecessary to go through inspection. It is, therefore, possible to prevent a delay in traveling of a traveler or baggage while ensuring the security of a transportation means.

It is noted that, in Embodiment 1 or 2, a part of the processing described to be executed by the CPU 11 using the check machine 21 or terminal device 22 may be distributed to and be executed by the check machine 21 or terminal device 22. Furthermore, in Embodiment 1 or 2, a part of the processing described to be executed by the CPU 11 may be distributed to and be executed by the CPUs 11 in multiple travel situation detection apparatuses 1.

Though Embodiments 1 and 2 showed examples where an ID recorded in the ticket 31 or baggage claim tag 32 is acquired, another medium such as a mobile phone, a magnetic card or a wireless tag may be used as a medium for recording an ID in the present invention. Moreover, the travel situation detection system may utilize biological information such as fingerprints, iris or vein pattern as identification information of a traveler. When a traveler travels several times using the identification information comprised of the same biological information, the CPU 11 may preferably apply new identification information for distinction at each travel. This allows the CPU 11 to distinguish the information acquired in the last travel and the information to be obtained in the current travel. Alternatively, as another example, in the case where information of multiple travels is stored in the storage unit 14, the CPU 11 may execute various types of processing by always using the latest information. Moreover, the travel situation detection system may have a form of using multiple kinds of identification information. In this form, the check machine 21 has a function of acquiring multiple kinds of identification information. For example, the check machine 21 has a function of acquiring an ID recorded in the ticket 31 and biological information of a traveler, as well as a function of reading several kinds of IDs recorded in the baggage claim tag 32. Furthermore, several types of identification information are associated with one another and stored at the traveler data or baggage data stored in the storage unit 14 of the travel situation detection apparatus 1. In this form, the CPU 11 acquires several types of identification information at step S501. Moreover, the CPU 11 determines at step S504 whether or not the combination of the acquired several types of identification information matches with the combination precedently recorded at the traveler data or baggage data. If the combination of the acquired several types of identification information does not match with the pre-recorded combination, the CPU 11 executes error processing at step S502 to make the check machine 21 block the passage of the traveler and to make the check machine 21 or terminal device 22 output the fact that the identification information are different. If the combination of the acquired several types of identification information matches with the pre-recorded combination, the CPU 11 executes the processing at and after step S505. In this form, the travel situation detection system can more strictly perform confirmation of a traveler.

Though Embodiments 1 and 2 showed examples where the flight specifying information is used as one of the use condition specifying information, the travel situation detection system may have a form of using other information as the use condition specifying information. For example, as the use condition specifying information, the gender or age included in the traveler's personal information or weather information may be used. In this case, however, the flight specifying information is not included, so that the travel situation detection system preferably makes determination on passage time. Furthermore, the travel situation detection system may also use several types of information as use condition specifying information. For example, the flight specifying information, gender and age may be used as the use condition specifying information. When a sufficient amount of travel process data is stored in the storage unit 14 of the travel situation detection apparatus 1, it is possible to detect the travel situation with a higher accuracy by using several types of information as use condition specifying information.

The information used as the use condition specifying information may also be set individually for each traveler or baggage. Here, the information used by a traveler or a sender of baggage as the use condition specifying information at the time of reservation may be selected and set. More specifically, for example, the server device accepting a reservation for a flight stores information which can be used as the use condition specifying information, and it uses a website for reservation or the like to display the information which can be used as the use condition specifying information. The traveler or baggage sender selects and input the information desired to be used as the use condition specifying information among the displayed information at the time of reservation. The input use condition specifying information is acquired by the transportation information storage device 4 as a part of the reservation information and is further acquired by the travel situation detection apparatus 1. The CPU 11 records the input use condition specifying information at the traveler data or baggage data by associating it with other information recorded at the traveler data or baggage data. The CPU 11 reads out passage time or a passage period for each of all the combinations of the use condition specifying information and information indicating each passage point, such as an ID of the check machine 21, recorded at the traveler data or baggage data, and calculates a mean value and a standard deviation thereof. The CPU 11 then records the calculated mean value and standard deviation at the mean data by associating it with each of the use condition specifying information and the information indicating a passage point. Moreover, at step S11, the CPU 11 reads out the mean value and standard deviation, which are associated with the use condition specifying information related to the ID of the traveler or baggage passed through the check machine 21 and with the ID of the passed-through check machine 21, from the mean data in the stage unit 14, and the CPU 11 performs comparison processing.

Though Embodiments 1 and 2 showed examples in which a mean value is as a statistical representative value, the travel situation detection system may take a form of using a statistical representative value other than a mean value such as a median value or a mode value. Furthermore, though Embodiments 1 and 2 mainly described the processing performed in a departure airport and an arrival airport, similar processing may also be performed at an airport where a traveler or baggage uses for transfer.

Moreover, though it was described in Embodiments 1 and 2 that the transportation means is an airplane and that the transportation facility is an airport, the present invention may be applicable to any other transportation means that repeatedly operates at certain time. For example, the transportation means may alternatively be a train, a bus, a taxi, a private vehicle, a snow vehicle, a horse carriage, a ropeway, a cable car, a linear motor car, an air-cushion vehicle, a submarine or a ship. In the future, an aerotrain and a spaceship may also be applicable. Furthermore, the present invention may also be applied to a case where a number of different transportation means are used. The transportation facility also includes an area where the check machine 21 may be installed or used, such as a train station, bus terminal, station building, bus stop, depot, maintenance area, turnaround area, delivery and collection area, place of meet and break-up, traffic circle, accessway or underground pathway.

Though Embodiments 1 and 2 described a person or object as a traveler or baggage, the person or object in the present invention may be any object including a person, which travels by using a transportation means repeatedly operated at certain time. Moreover, the baggage is not limited to those shipped to a cargo of a transportation means such as an airplane, but includes all baggage carried by a transportation means such as a carry-on bag of a traveler.

### DESCRIPTION OF REFERENCE CODES

- 1: travel situation detection apparatus
- 10: recording medium
- 11: CPU
- 12: RAM
- 13: drive unit
- 14: storage unit
- 15: clock unit
- 16: interface unit
- 17: communication unit
- 18: computer program
- 21: check machine (passage time specifying device)
- 22: terminal device
- 23: mobile terminal device
- 31: ticket
- 32: baggage claim tag
- 4: transportation information storage device
- 5: inspection information storage device
- 6: product information storage device
- N1, N2: communication network

## Claims

1. A travel situation detection system detecting a situation at a time when a person or object using repeatedly operated transportation travels at a transportation facility, **characterized by** comprising:
a passage time specifying means for specifying passage time at which a person or object passes through each of a plurality of passage points on a route through which the person or object passes at the transportation facility;
a means for accumulating passage time specified by the passage time specifying means, with respect to a use condition in which transportation is used by a person or object and with respect to each of the plurality of passage points;
a means for individually calculating a statistical representative value of passage time accumulated by the means for accumulating with respect to the use condition and each of the plurality of passage points, or a statistical representative value of passage periods elapsed between two passage points including one of the passage points;
a means for storing a statistical representative value of the passage time or of the passage periods calculated by the means for calculating, with respect to the use condition and passage point; and
a means for outputing, when the passage time specifying means specifies passage time at which a person or object passes through one passage point, the specified passage time as well as a statistical representative value of passage time stored with respect to said one passage point and a use condition of transportation for the person or object, or a passage period elapsed to said one passage point from another passage point calculated based on the passage time as well as a statistical representative value of passage periods elapsed to said one passage point from said another passage point which is stored with respect to said one passage point and the use condition.

2. A travel situation detection system detecting a situation at a time when a person or object using repeatedly operated transportation travels at a transportation facility, **characterized by** comprising:
a passage time specifying device which is installed at one passage point or a plurality of passage points on a route through which a person or object passes at the transportation facility and which specifies passage time at which a person or object passes through the passage point;
one or a plurality of output devices; and
a travel situation detection apparatus connected to the output device and the passage time specifying device, wherein
the passage time specifying device includes a means for acquiring identification information for identifying a person or object passing through the passage point, and
the travel situation detection apparatus includes:
a means for storing use condition specifying information which specifies a use condition at a time when a person or object uses transportation, in association with the identification information of the person or object;
a means for storing the passage time specified by the passage time specifying device in association with information indicating a passage point at which the passage time specifying device is installed and in association with the use condition specifying information which is stored and related to the identification information acquired by the passage time specifying device;
a means for individually calculating a statistical representative value of passage time which is stored by the means for storing and which is associated with each of a plurality of pieces of use condition specifying information and information indicating passage points;
a means for storing a statistical representative value of passage time calculated by the means for calculating, in association with each of a plurality of pieces of use condition specifying information and information indicating passage points;
a means for comparing, when the passage time specifying device specifies passage time, the specified passage time with a statistical representative value of passage time stored in association with the information indicating a passage point at which the passage time specifying device is installed and in association with use condition specifying information which is stored and related to the identification information acquired by the passage time specifying device; and
a means for making the output device output a result of comparison made by the means for comparing.

3. The travel situation detection system according to Claim 2, wherein
the travel situation detection apparatus further includes:
a means for storing output device information indicating a specific output device in association with identification information; and
a means for making the specific output device which is indicated by the output device information which is stored in association with the identification information which is acquired by the passage time specifying device output the passage time specified by the passage time specifying device, information indicating a passage point at which the passage time specifying device is installed, and the result of comparison.

4. The travel situation detection system according to Claim 2 or 3, wherein
the travel situation detection apparatus further includes:
a means for storing route information indicating a travel route through which a person or object is to travel at a transportation facility, in association with identification information of the person or object;
a means for determining whether or not a passage point at which the passage time specifying device is installed is on the travel route, based on the route information stored in association with the identification information acquired by the passage time specifying device; and
a means for making the output device output information indicating that the travel route is incorrect when the passage point is not on the travel route.

5. The travel situation detection system according to Claim 4, wherein
the passage time specifying device further includes:
a means for accepting a request for guidance to a predetermined service at a transportation facility; and
a means for outputting information representing a route to the predetermined service, and
the travel situation detection apparatus further includes:
a means for changing, when the passage time specifying device accepts the request, route information stored in association with the identification information acquired by the passage time specifying device into revised information indicating a new travel route with an additional route from the passage time specifying device to the predetermined service; and
a means for making the passage time specifying device output the information representing the route to the predetermined service.

6. The travel situation detection system according to Claims 2 to 5, wherein
the passage time specifying device further includes
a means for acquiring, when identification information of one person is acquired, identification information of another person or object being with said one person, and
the travel situation detection apparatus further includes:
a means for storing, in association with identification information of a person, identification information of another person or object supposed to travel with said person; and
a means for making the output device output information indicating abnormality when the acquired identification information of said another person or object is different from the identification information stored in association with the identification information of said one person, when the identification information of said another person or object is not stored in association with the identification information of said one person, or when the identification information of said another person or object stored in association with the identification information of said one person is not acquired by the passage time specifying device.

7. The travel situation detection system according to Claims 2 to 7, wherein
the travel situation detection apparatus further includes:
a means for storing information indicating that an article needs to be handed over or collected, in association with identification information of a person who needs to have the article handed over or collected;
a means for determining whether or not the information indicating that an article needs to be handed over or collected is stored in association with the identification information acquired by the passage time specifying device; and
a means for making the output device output information indicating that an article needs to be handed over or collected when the information indicating that the article needs to be handed over or collected is stored in association with the identification information.

8. The travel situation detection system according to Claims 2 to 5, further comprising
a blocking means for blocking a person or object passing through a passage point, wherein
the travel situation detection apparatus further includes:
a means for storing inspection information related to a person or object to be inspected;
a means for storing individual information related to an individual person or object, in association with identification information of the person or object;
a means for determining whether or not at least a part of the individual information stored in association with the identification information acquired by the passage time specifying device matches with a part of the stored inspection information;
a means for making the blocking means block a person or object passing through a passage point at which the passage time specifying device is installed, when at least a part of the individual information matches with a part of the inspection information; and
a means for making the output device output information indicating that inspection is needed.

9. The travel situation detection system according to Claim 8, further comprising
a measurement means for taking a radiograph or measuring a weight of an object passing through a passage point, wherein
the travel situation detection apparatus further includes:
a means for storing a radiograph of an object taken by or a weight of an object measured by the measurement means, in association with the identification information of the object acquired by the passage time specifying device;
a means for determining whether or not the radiograph taken by or the weight measured by the measurement means matches with the radiograph or weight stored in association with identification information of the object within a predetermined allowable range;
a means for making the blocking means block the object passing through a passage point at which the passage time specifying device is installed when the radiograph taken by or the weight measured by the measurement means does not match with the radiograph or weight stored in association with the identification information of the object within a predetermined allowable range; and
a means for making the output device output information indicating that a content of the object is not consistent.

10. The travel situation detection system according to Claim 8 or 9, wherein
the passage time specifying device further includes
a means for acquiring a plurality of kinds of identification information for identifying a person or object, and
the travel situation detection apparatus further includes:
a means for storing a combination of a plurality of kinds of identification information;
a means for determining, when the passage time specifying device acquires a plurality of kinds of identification information, whether or not the combination of the acquired plurality of kinds of identification information is stored;
a means for making the blocking means block the object passing through a passage point at which the passage time specifying device is installed when the combination of the acquired plurality of kinds of identification information is not stored; and
a means for making the output device output information indicating that the combination of identification information does not exist.
